# EUROPEAN PATENT SPECIFICATION

(11) **EP 4 443 868 B1**
(45) Date of publication and mention of the grant of the patent: **08.07.2026**
(21) Application number: 22898525.5
(22) Date of filing: 21.11.2022
(51) Int. Cl.: H04N 9/64, H04N 5/272, H04N 9/73

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 29.11.2021 JP 2021193210
(43) Date of publication of application: 09.10.2024
(60) Divisional application: 26175463.4
(73) Proprietor: Sony Group Corporation, Tokyo 108-0075 (JP)
(72) Inventor: TSUCHIYA, Takashi, Tokyo 108-0075 (JP); MORITA, Takuya, Tokyo 108-0075 (JP); KANEKO, Tetsuo, Tokyo 108-0075 (JP)
(74) Representative: D Young & Co LLP
(86) International application number: PCT/JP2022/042998
(87) International publication number: WO 2023/095742

(56) References cited:
- JP-A- 2001 060 082
- JP-A- 2003 134 526
- JP-A- 2007 208 629
- JP-A- 2010 521 098
- JP-A- 2011 259 047
- JP-A- 2011 259 047
- JP-A- H1 185 952
- US-A1- 2001 014 175
- US-A1- 2012 081 279
- US-A1- 2014 105 495
- US-B1- 6 335 765
- US-B1- 7 250 945

## Description

### TECHNICAL FIELD

The present technology relates to an information processing device and an information processing method, and particularly relates to a video processing technology performed by the information processing device.

### BACKGROUND ART

As an imaging method for producing a video content such as a movie, a technique is known in which a performer performs acting with what is called a green back and then a background video is synthesized.

Furthermore, in recent years, instead of green back shooting, an imaging system has been developed in which a background video is displayed on a display in a studio provided with a large display, and a performer performs acting in front of the background video, to thereby enable imaging of the performer and the background can be imaged, and this imaging system is known as what is called a virtual production, in-camera VFX, or LED wall virtual production.

Patent Document 1 below discloses a technology of a system that images a performer acting in front of a background video.

### CITATION LIST

### PATENT DOCUMENT

Patent Document 1: US Patent Application Publication No. 2020/0145644 A
Patent Document 2: US 2012/081279 A1

### SUMMARY OF THE INVENTION

### PROBLEMS TO BE SOLVED BY THE INVENTION

When a background video is displayed on a large display, and then a performer and a background video are captured with a camera, there is no need to prepare a background video to be separately synthesized, and the performer and staff can visually understand the scene and perform acting or determine whether the acting is good or bad, or the like, which are more advantageous than green back shooting.

However, these videos and videos obtained by capturing an object such as a performer sometimes have different colors from the video data of the original background video. This occurs when the color of the digital data of the background video is converted by the light emission characteristics of the display or the imaging characteristics of the camera.

As a result, for example, when an object such as a performer or an object is captured as the foreground of the background video, the captured video becomes a video with discomfort. In some cases, it is necessary to perform color matching in post-production, which may be very troublesome.

Therefore, the present disclosure proposes a technology for obtaining a video without discomfort in a case where a video displayed on a display and an object are simultaneously captured.

### SOLUTIONS TO PROBLEMS

Embodiments of the present disclosure is defined by the appended set of claims.

### BRIEF DESCRIPTION OF DRAWINGS

Fig. 1 is an explanatory diagram of an imaging system of an embodiment of the present technology.
Fig. 2 is an explanatory diagram of a background video according to a camera position of the imaging system of the embodiment.
Fig. 3 is an explanatory diagram of a background video according to a camera position of the imaging system of the embodiment.
Fig. 4 is an explanatory diagram of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing device of the embodiment.
Fig. 9 is an explanatory diagram of a configuration example for performing color conversion of a background video according to the embodiment.
Fig. 10 is an explanatory diagram of another configuration example for performing color conversion of a background video according to the embodiment.
Fig. 11 is a flowchart of background video generation including color conversion processing according to the embodiment.
Fig. 12 is an explanatory diagram of LUT creation processing according to the embodiment.
Fig. 13 is an explanatory diagram of a system using a LUT creation module according to the embodiment.
Fig. 14 is an explanatory diagram of an LUT creation video according to the embodiment.
Fig. 15 is an explanatory diagram in a case where a camera includes the LUT creation module according to the embodiment.
Fig. 16 is an explanatory diagram in a case where a set top box includes the LUT creation module according to the embodiment.
Fig. 17 is a block diagram of the LUT creation module according to the embodiment.
Fig. 18 is an explanatory diagram of a relationship between a 3D-LUT and a RAM in a color sampler of the embodiment.
Fig. 19 is an explanatory diagram of timing adjustment of the LUT creation module according to the embodiment.
Fig. 20 is a flowchart of LUT creation processing according to the embodiment.
Fig. 21 is an explanatory diagram of another example of the LUT creation video according to the embodiment.
Fig. 22 is an explanatory diagram of automatic determination of a direction of a video according to the embodiment.
Fig. 23 is an explanatory diagram of tally lamp cooperation according to the embodiment.
Fig. 24 is an explanatory diagram of hybrid processing of LUT creation according to the embodiment.
Fig. 25 is an explanatory diagram in a case of imaging condition change according to the embodiment.
Fig. 26 is an explanatory diagram of processing according to an imaging condition change of the embodiment.

### MODE FOR CARRYING OUT THE INVENTION

Hereinafter, embodiments will be described in the following order.
<1. Imaging System and Content Production>
<2. Configuration of Information Processing Device>
<3. Color Conversion Processing Using LUT>
<4. LUT Creation Processing>
<5. Color Conversion Processing According to Imaging Condition Change>
<6. Summary and Modification Examples>

Note that, in the present disclosure, "video" or "image" includes both a still image and a moving image. In addition, "video" refers not only to a state in which video data is displayed on the display, but also video data in a state in which video data is not displayed on the display may be comprehensively referred to as "video". For example, in the description of the imaging system and content production, the term "video" is comprehensively used. However, for the sake of explanation of the processing of color conversion and LUT creation using the LUT, the notation of "video data" is used in a case where the video data is referred to instead of the displayed video.

### <1. Imaging System and Video Content Production>

An imaging system to which the technology of the present disclosure can be applied and production of a video content will be described.

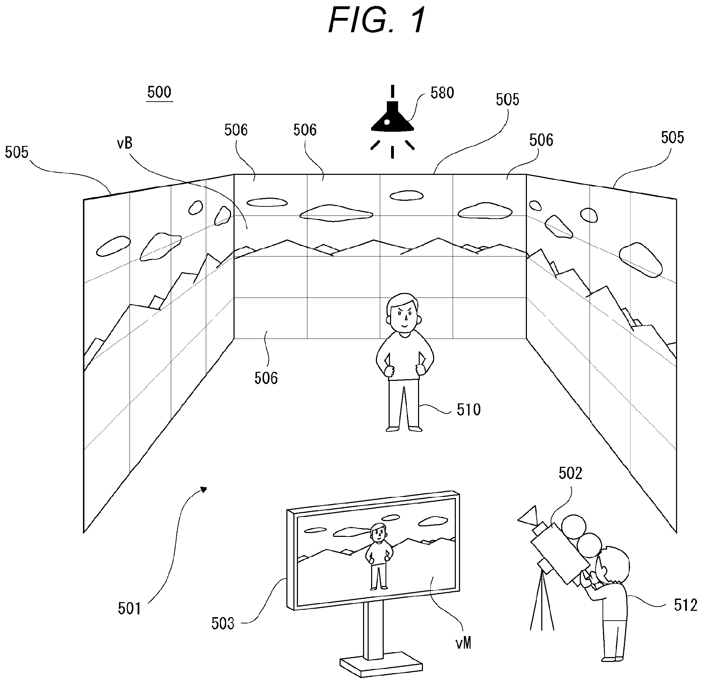

Fig. 1 schematically illustrates an imaging system 500. The imaging system 500 is a system configured to perform imaging as virtual production, and a part of equipment disposed in an imaging studio is illustrated in the drawing.

In the imaging studio, a performance area 501 in which a performer 510 performs performance such as acting is provided. A large display device is disposed on at least a back surface, left and right side surfaces, and an upper surface of the performance area 501. Although the device type of the display device is not limited, the drawing illustrates an example in which an LED wall 505 is used as an example of the large display device.

One LED wall 505 forms a large panel by vertically and horizontally connecting and disposing a plurality of LED panels 506. The size of the LED wall 505 is not particularly limited, but is only necessary to be a size that is necessary or sufficient as a size for displaying a background when the performer 510 is imaged.

A necessary number of lights 580 are disposed at necessary positions such as above or on the side of the performance area 501 to illuminate the performance area 501.

In the vicinity of the performance area 501, for example, a camera 502 for imaging a movie or other video content is disposed. An camera operator 512 can move the position of the camera 502, and can perform an operation of an imaging direction, an angle of view, or the like. Of course, it is also conceivable that movement, angle of view operation, or the like of the camera 502 is performed by remote control. Furthermore, the camera 502 may automatically or autonomously move or change the angle of view. For this reason, the camera 502 may be mounted on a camera platform or a mobile body.

The camera 502 collectively captures the performer 510 in the performance area 501 and the video displayed on the LED wall 505. For example, by displaying a scene as a background video vB on the LED wall 505, it is possible to capture a video similar to that in a case where the performer 510 actually exists and performs acting at the place of the scene.

An output monitor 503 is disposed near the performance area 501. The video captured by the camera 502 is displayed on the output monitor 503 in real time as a monitor video vM. Thus, a director and staff who produce a video content can confirm the captured video.

As described above, the imaging system 500 that images the performance of the performer 510 in the background of the LED wall 505 in the imaging studio has various advantages as compared with the green back shooting.

For example, in a case of the green back shooting, it is difficult for the performer to imagine the background and the situation of the scene, which may affect the acting. Whereas, by displaying the background video vB, the performer 510 can easily perform acting, and the quality of acting is improved. Furthermore, it is easy for the director and other staff members to determine whether or not the acting of the performer 510 matches the background or the situation of the scene.

Furthermore, post-production after imaging is more efficient than in the case of the green back shooting. This is because what is called a chroma key composition may be unnecessary or color correction or reflection composition may be unnecessary. Furthermore, even in a case where the chroma key composition is required at the time of imaging, the background screen does not need to be added, which is also helpful to improve efficiency.

In the case of the green back shooting, the hue of the green increases on the performer's body, dress, and objects, and thus correction thereof is necessary. Furthermore, in the case of the green back shooting, in a case where there is an object in which a surrounding scene is reflected, such as glass, a mirror, or a snowdome, it is necessary to generate and synthesize an image of the reflection, but this is troublesome work.

Whereas, in a case of imaging by the imaging system 500 in Fig. 1, the hue of the green does not increase, and thus the correction is unnecessary. Furthermore, by displaying the background video vB, the reflection on the actual article such as glass is naturally obtained and captured, and thus, it is also unnecessary to synthesize the reflection video.

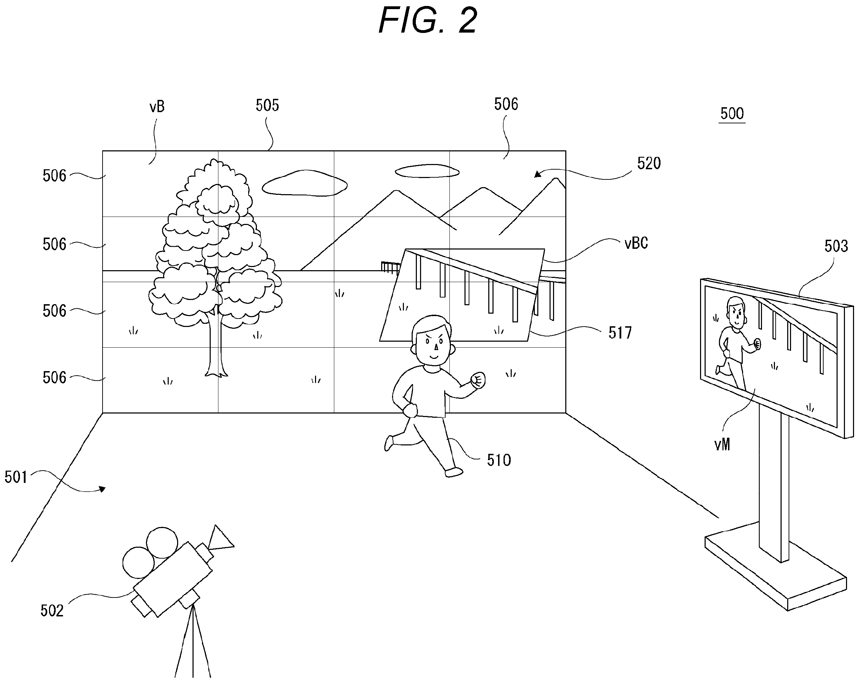

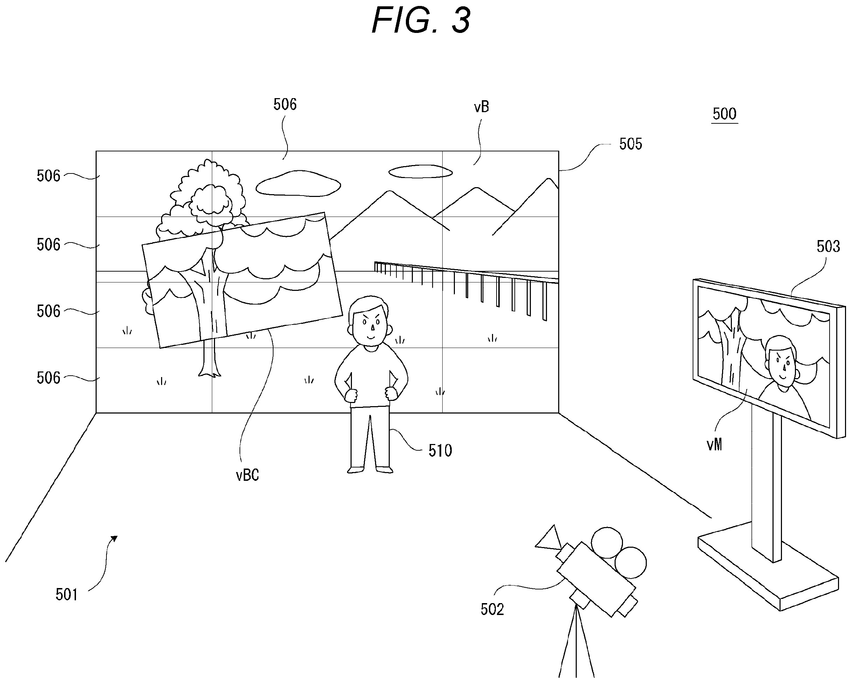

Here, the background video vB will be described with reference to Figs. 2 and 3. Even if the background video vB is displayed on the LED wall 505 and captured together with the performer 510, the background of the captured video becomes unnatural only by simply displaying the background video vB. This is because a background that is three-dimensional and has depth is actually used as the background video vB in a planar manner.

For example, the camera 502 can capture the performer 510 in the performance area 501 from various directions, and can also perform a zoom operation. The performer 510 also does not stop at one place. Then, the actual appearance of the background of the performer 510 should change according to the position, the imaging direction, the angle of view, and the like of the camera 502, but such a change cannot be obtained in the background video vB as the planar video. Accordingly, the background video vB is changed so that the background is similar to the actual appearance including a parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, a capturing region video vBC is illustrated in the background video vB.

Note that a portion of the background video vB excluding the capturing region video vBC is referred to as an "outer frustum", and the capturing region video vBC is referred to as an "inner frustum".

The background video vB described here indicates the entire video displayed as the background including the capturing region video vBC (inner frustum).

A range of the capturing region video vBC (inner frustum) corresponds to a range actually imaged by the camera 502 in the display surface of the LED wall 505. Then, the capturing region video vBC is a video that is transformed so as to express a scene that is actually viewed when the position of the camera 502 is set as a viewpoint according to the position, the imaging direction, the angle of view, and the like of the camera 502.

Specifically, 3D background data that is a 3D (three dimensions) model as a background is prepared, and the capturing region video vBC is sequentially rendered on the basis of the viewpoint position of the camera 502 with respect to the 3D background data in real time.

Note that the range of the capturing region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the capturing region video vBC rendered in real time in this manner is synthesized with the video of the outer frustum. The video of the outer frustum used in the background video vB is rendered in advance on the basis of the 3D background data, and the video is incorporated as the capturing region video vBC rendered in real time into a part of the video of the outer frustum to generate the entire background video vB.

Thus, even when the camera 502 is moved back and forth, or left and right, or a zoom operation is performed, the background of the range imaged together with the performer 510 is imaged as a video corresponding to the viewpoint position change accompanying the actual movement of the camera 502.

As illustrated in Figs. 2 and 3, the monitor video vM including the performer 510 and the background is displayed on the output monitor 503, and this is the captured video. The background of the monitor video vM is the capturing region video vBC. That is, the background included in the captured video is a real-time rendered video.

As described above, in the imaging system 500 of the embodiment, the background video vB including the capturing region video vBC is changed in real time so that not only the background video vB is simply displayed in a planar manner but also a video similar to that in a case of actually imaging on location can be captured.

Note that a processing load of the system is also reduced by rendering only the capturing region video vBC as a range reflected by the camera 502 in real time instead of the entire background video vB displayed on the LED wall 505.

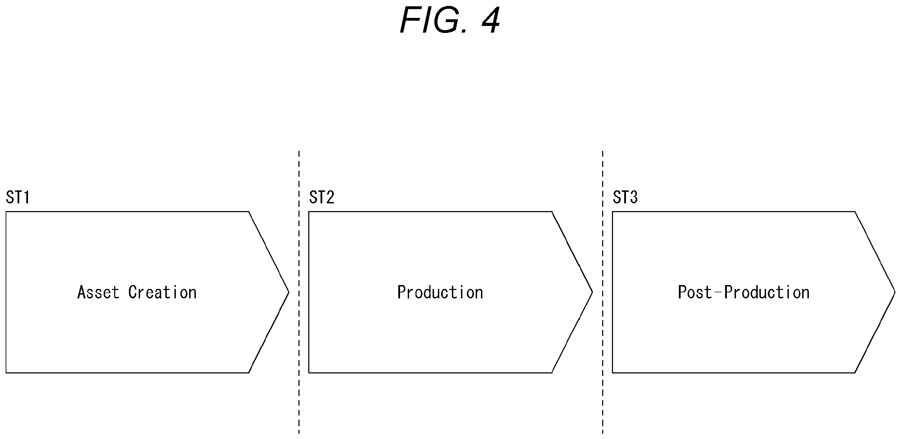

Here, a producing step for a video content as virtual production in which imaging is performed by the imaging system 500 will be described. As illustrated in Fig. 4, the video content producing step is roughly divided into three stages. The stages are asset creation ST1, production ST2, and post-production ST3.

The asset creation ST1 is a step of creating 3D background data for displaying the background video vB. As described above, the background video vB is generated by performing rendering in real time using the 3D background data at the time of imaging. For this purpose, 3D background data as a 3D model is produced in advance.

Examples of a method of producing the 3D background data include full computer graphics (CG), point cloud data (Point Cloud) scanning, and photogrammetry.

The full CG is a method of producing a 3D model with computer graphics. Among the three methods, the method requires the most man-hours and time, but is preferably used in a case where an unrealistic video, a video that is difficult to capture in practice, or the like is desired to be the background video vB.

The point cloud data scanning is a method of generating a 3D model based on the point cloud data by performing distance measurement from a certain position using, for example, LiDAR, capturing an image of 360 degrees by a camera from the same position, and placing color data captured by the camera on a point measured by the LiDAR. Compared with the full CG, the 3D model can be created in a short time. Furthermore, it is easy to produce a 3D model with higher definition than that of photogrammetry.

Photogrammetry is a photogrammetry technology for analyzing parallax information from two-dimensional images obtained by imaging an object from a plurality of viewpoints to obtain dimensions and shapes. 3D model creation can be performed in a short time.

Note that the point cloud information acquired by the LiDAR may be used in the 3D data generation by the photogrammetry.

In the asset creation ST1, for example, a 3D model to be 3D background data is created using these methods. Of course, the above methods may be used in combination. For example, a part of a 3D model produced by point cloud data scanning or photogrammetry is produced by CG and synthesized or the like.

The production ST2 is a step of performing imaging in the imaging studio as illustrated in Fig. 1. Element technologies in this case include real-time rendering, background display, camera tracking, illumination control, and the like.

The real-time rendering is rendering processing for obtaining the capturing region video vBC at each time point (each frame of the background video vB) as described with reference to Figs. 2 and 3. This is to render the 3D background data created in the asset creation ST1 from a viewpoint corresponding to the position of the camera 502 or the like at each time point.

In this way, the real-time rendering is performed to generate the background video vB of each frame including the capturing region video vBC, and the background video vB is displayed on the LED wall 505.

The camera tracking is performed to obtain imaging information by the camera 502, and tracks position information, an imaging direction, an angle of view, and the like at each time point of the camera 502. By providing the imaging information including these to a rendering engine in association with each frame, real-time rendering according to the viewpoint position or the like of the camera 502 can be executed.

The imaging information is information linked with or associated with a video as metadata.

It is assumed that the imaging information includes position information of the camera 502 at each frame timing, a direction of the camera, an angle of view, a focal length, an F value (aperture value), a shutter speed, lens information, and the like.

The illumination control is to control the state of illumination in the imaging system 500, and specifically, to control the light amount, emission color, illumination direction, and the like of the light 580. For example, illumination control is performed according to time setting of a scene to be imaged, setting of a place, and the like.

The post-production ST3 indicates various processes performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed as the clip editing.

As the video effect, a synthesis of a CG video or a special effect video or the like may be performed.

Next, a configuration of the imaging system 500 used in the production ST2 will be described.

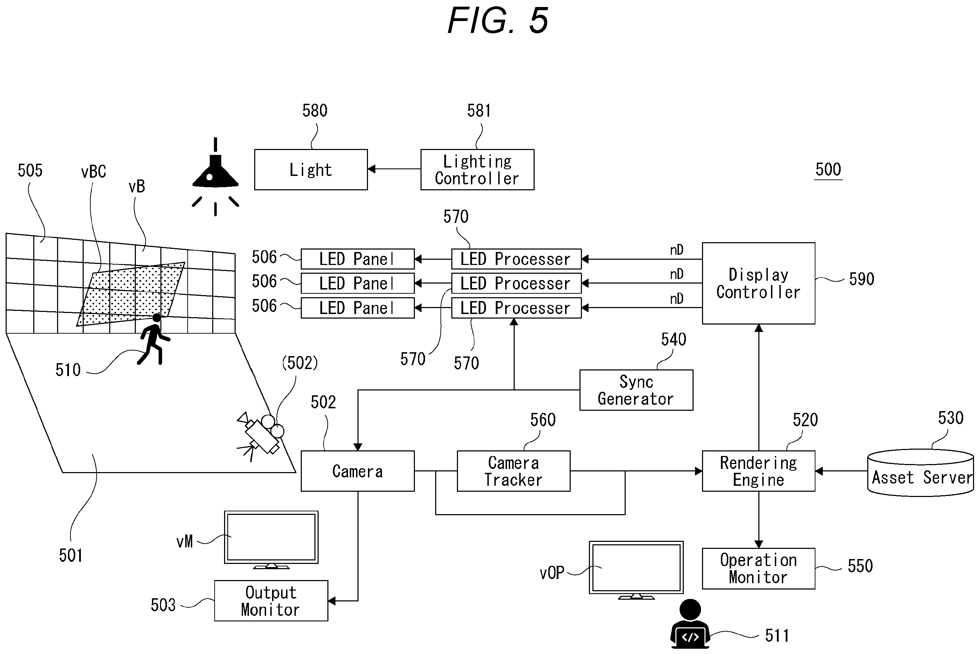

Fig. 5 is a block diagram illustrating a configuration of the imaging system 500 whose outline has been described with reference to Figs. 1, 2, and 3.

The imaging system 500 illustrated in Fig. 5 includes the above-described LED wall 505 including the plurality of LED panels 506, the camera 502, the output monitor 503, and the light 580. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

The LED processors 570 are provided corresponding to the LED panels 506, and perform video display driving of the corresponding LED panels 506.

The sync generator 540 generates a synchronization signal for synchronizing frame timings of display videos by the LED panels 506 and a frame timing of imaging by the camera 502, and supplies the synchronization signal to the respective LED processors 570 and the camera 502. However, this does not prevent output from the sync generator 540 from being supplied to the rendering engine 520.

The camera tracker 560 generates imaging information by the camera 502 at each frame timing and supplies the imaging information to the rendering engine 520. For example, the camera tracker 560 detects the position information of the camera 502 relative to the position of the LED wall 505 or a predetermined reference position and the imaging direction of the camera 502 as one of the imaging information, and supplies them to the rendering engine 520.

As a specific detection method by the camera tracker 560, there is a method of randomly disposing a reflector on the ceiling and detecting a position from reflected light of infrared light emitted from the camera 502 side to the reflector. Furthermore, as a detection method, there is also a method of estimating the self-position of the camera 502 by information of a gyro mounted on a camera platform of the camera 502 or a main body of the camera 502, or image recognition of a captured video of the camera 502.

Furthermore, an angle of view, a focal length, an F value, a shutter speed, lens information, and the like may be supplied from the camera 502 to the rendering engine 520 as the imaging information.

The asset server 530 is a server that can store a 3D model created in the asset creation ST1, that is, 3D background data on a recording medium and read the 3D model as necessary. That is, it functions as a data base (DB) of 3D background data.

The rendering engine 520 performs processing of generating the background video vB to be displayed on the LED wall 505. For this reason, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates designated in advance.

Furthermore, as processing for each frame, the rendering engine 520 specifies the viewpoint position and the like with respect to the 3D background data using the imaging information supplied from the camera tracker 560 or the camera 502, and renders the capturing region video vBC (inner frustum).

Moreover, the rendering engine 520 synthesizes the capturing region video vBC rendered for each frame with the outer frustum generated in advance to generate the background video vB as the video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences of color development or the like, manufacturing errors, and the like between display units.

Note that the display controller 590 may not be provided, and the rendering engine 520 may perform these processes. That is, the rendering engine 520 may generate the divided video signals nD, perform calibration, and transmit the divided video signals nD to the respective LED panels 506.

By the LED processors 570 driving the respective LED panels 506 on the basis of the respective received divided video signals nD, the entire background video vB is displayed on the LED wall 505. The background video vB includes the capturing region video vBC rendered according to the position of the camera 502 or the like at the time point.

The camera 502 can capture the performance of the performer 510 including the background video vB displayed on the LED wall 505 in this manner. The video obtained by imaging by the camera 502 is recorded on a recording medium in the camera 502 or an external recording device (not illustrated), and is supplied to the output monitor 503 in real time and displayed as the monitor video vM.

The operation monitor 550 displays an operation image vOP for controlling the rendering engine 520. An engineer 511 can perform necessary settings and operations regarding rendering of the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. Therefore, the lighting controller 581 may perform light emission control in accordance with an instruction from the rendering engine 520, a master controller (not illustrated), or the like.

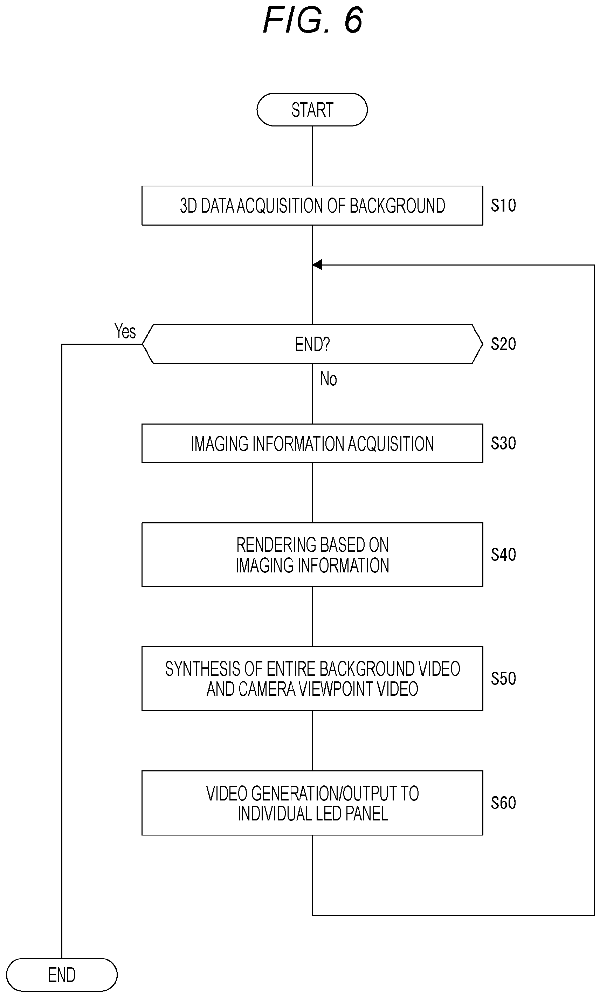

Fig. 6 illustrates a processing example of the rendering engine 520 in the imaging system 500 having such a configuration.

In step S10, the rendering engine 520 reads the 3D background data to be used this time from the asset server 530, and develops the 3D background data in an internal work area.

Then, a video used as the outer frustum is generated.

Thereafter, the rendering engine 520 repeats the processing from step S30 to step S60 at each frame timing of the background video vB until it is determined in step S20 that the display of the background video vB based on the read 3D background data is ended.

In step S30, the rendering engine 520 acquires the imaging information from the camera tracker 560 and the camera 502. Thus, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, and the like of the camera 502 to be reflected in the current frame, and rendering is performed. At this time, video processing reflecting a focal length, an F value, a shutter speed, lens information, and the like can also be performed. By this rendering, video data as the capturing region video vBC can be obtained.

In step S50, the rendering engine 520 performs processing of synthesizing the outer frustum, which is the entire background video, and the video reflecting the viewpoint position of the camera 502, that is, the capturing region video vBC. For example, the processing is to synthesize a video generated by reflecting the viewpoint of the camera 502 with a video of the entire background rendered at a specific reference viewpoint. Thus, the background video vB of one frame displayed on the LED wall 505, that is, the background video vB including the capturing region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the respective divided video signals nD are transmitted to the respective LED processors 570.

By the above processing, the background video vB including the capturing region video vBC captured by the camera 502 is displayed on the LED wall 505 at each frame timing.

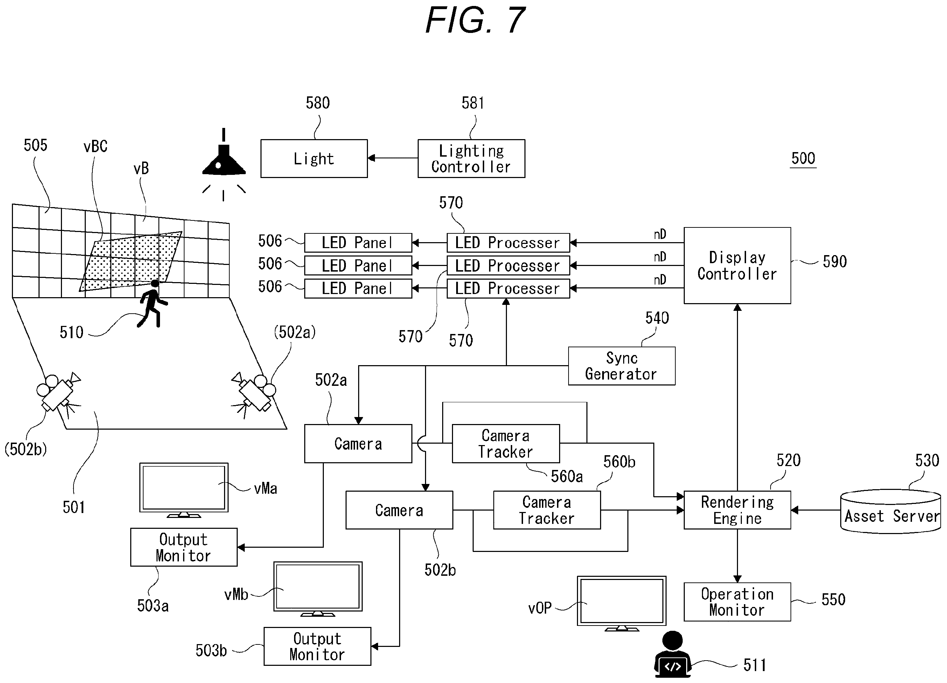

Incidentally, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b can independently perform imaging in the performance area 501.
Furthermore, synchronization between the cameras 502a and 502b and the LED processors 570 is maintained by the sync generator 540.

Output monitors 503a and 503b are provided corresponding to the cameras 502a and 502b, and are configured to display the videos captured by the corresponding cameras 502a and 502b as monitor videos vMa and vMb, respectively.

Furthermore, camera trackers 560a and 560b are provided corresponding to the cameras 502a and 502b, respectively, and detect the positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering for obtaining the background video vB of each frame using the imaging information of either the camera 502a side or the camera 502b side.

Note that although Fig. 7 illustrates an example using the two cameras 502a and 502b, it is also possible to perform imaging using three or more cameras 502.

However, in a case where the plurality of cameras 502 is used, there is a circumstance that the capturing region video vBC corresponding to each camera 502 interferes. For example, in the example in which the two cameras 502a and 502b are used as illustrated in Fig. 7, the capturing region video vBC corresponding to the camera 502a is illustrated, but in a case where the video of the camera 502b is used, the capturing region video vBC corresponding to the camera 502b is also necessary. When the capturing region video vBC corresponding to each of the cameras 502a and 502b is simply displayed, they interfere with each other. Therefore, it is necessary to contrive the display of the capturing region video vBC.

### <2. Configuration of Information Processing Device>

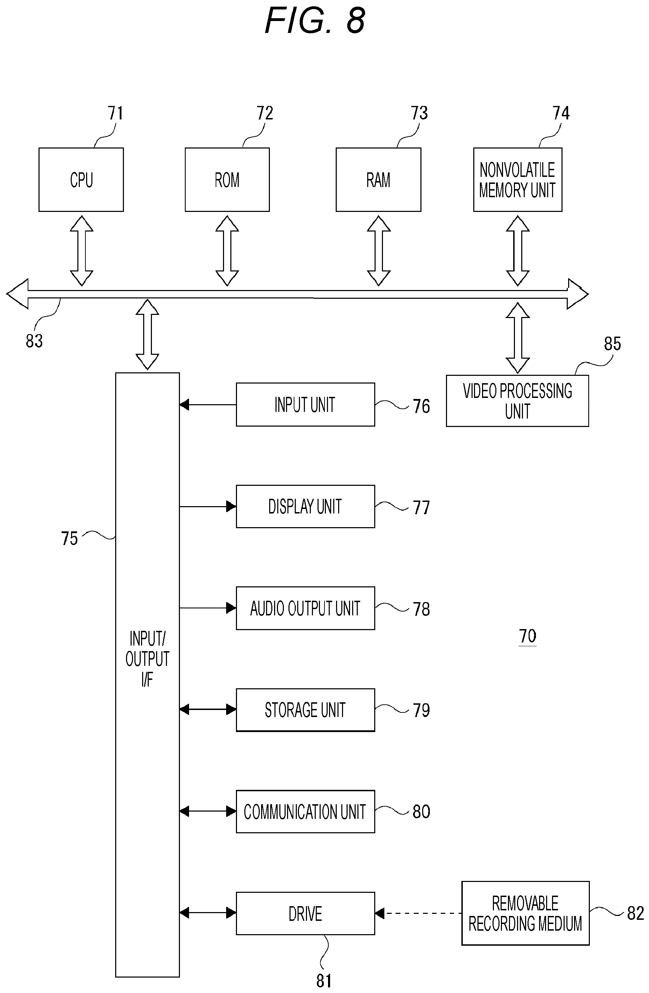

Next, a configuration example of an information processing device 70 that can be used in the asset creation ST1, the production ST2, and the post-production ST3 will be described with reference to Fig. 8.

The information processing device 70 is a device capable of performing information processing, particularly video processing, such as a computer device. Specifically, a personal computer, a workstation, a portable terminal device such as a smartphone and a tablet, a video editing device, and the like are assumed as the information processing device 70. Furthermore, the information processing device 70 may be a computer device configured as a server device or an arithmetic device in cloud computing.

In the case of the present embodiment, specifically, the information processing device 70 can function as a 3D model creation device that creates a 3D model in the asset creation ST1.

Furthermore, the information processing device 70 can function as the rendering engine 520 constituting the imaging system 500 used in the production ST2.

Moreover, the information processing device 70 can also function as the asset server 530.

Furthermore, the information processing device 70 can also function as a video editing device configured to perform various types of video processing in the post-production ST3.

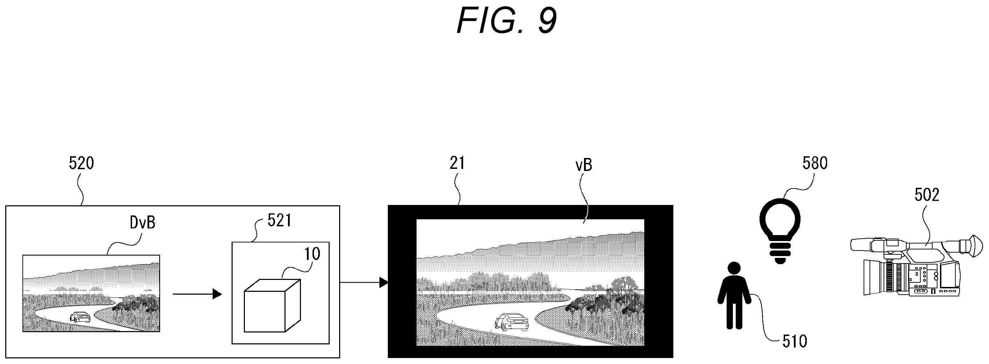

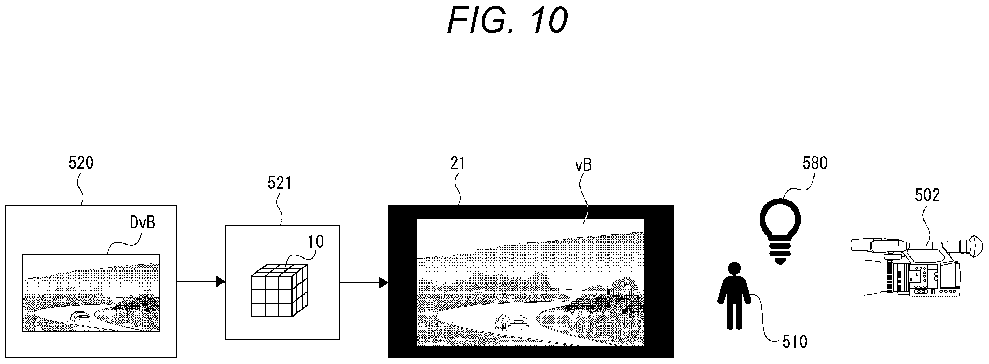

Furthermore, the information processing device 70 can function as the rendering engine 520 having a function as a color conversion unit 521 described later with reference to Fig. 9 and the like. Furthermore, as illustrated in Fig. 10, the information processing device 70 may include the color conversion unit 521 as a separate device from the rendering engine 520.

Furthermore, the information processing device 70 can be the information processing device 70 including an LUT creation module 30 to be described later. In that case, there are an example of the information processing device 70 built in the camera 502 and an example of the information processing device 70 as the set top box 50 separate from the camera 502.

A CPU 71 of the information processing device 70 illustrated in Fig. 8 executes various processes in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various processes.

A video processing unit 85 is configured as a processor that performs various types of video processing. For example, the processor is a processor capable of performing any one of 3D model generation processing, rendering, DB processing, video editing processing, color conversion processing using a 3D-LUT to be described later, processing as an LUT creation module that performs generation processing of a 3D-LUT, and the like, or a plurality of pieces of processing.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operator and an operation device is connected to the input/output interface 75. For example, as the input unit 76, various types of operation elements and operation devices such as a keyboard, a mouse, a key, a dial, a touch panel, a touch pad, a remote controller, and the like are assumed.

A user operation is detected by the input unit 76, and a signal corresponding to an input operation is interpreted by the CPU 71.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing device 70, a separate display device connected to the information processing device 70, and the like.

The display unit 77 displays various images, operation menus, icons, messages, and the like, that is, displays as a graphical user interface (GUI), on the display screen on the basis of the instruction from the CPU 71.

In some cases, the storage unit 79 including a hard disk drive (HDD), a solid-state memory, or the like or a communication unit 80 is connected to the input/output interface 75.

The storage unit 79 can store various pieces of data and programs. A DB can also be configured in the storage unit 79.

For example, in a case where the information processing device 70 functions as the asset server 530, a DB that stores a 3D background data group can be constructed using the storage unit 79.

The communication unit 80 performs communication processing via a transmission path such as the Internet, wired/wireless communication with various devices such as an external DB, an editing device, and an information processing device, bus communication, and the like.

For example, in a case where the information processing device 70 functions as the rendering engine 520, the communication unit 80 can access the DB as the asset server 530, and receive imaging information from the camera 502 or the camera tracker 560.

Furthermore, also in a case of the information processing device 70 used in the post-production ST3, the communication unit 80 can access the DB as the asset server 530 or the like.

A drive 81 is also connected to the input/output interface 75 as necessary, and a removable recording medium 82 such as a magnetic disk, an optical disk, a magneto-optical disk, a semiconductor memory, or the like is appropriately mounted.

The drive 81 can read video data, various computer programs, and the like from the removable recording medium 82. The read data is stored in the storage unit 79, and video and audio included in the data are output by the display unit 77 and the audio output unit 78. Furthermore, the computer program and the like read from the removable recording medium 82 are installed in the storage unit 79, as necessary.

In the information processing device 70, for example, software for the processing of the present embodiment can be installed via network communication by the communication unit 80 or the removable recording medium 82. Alternatively, the software may be stored in advance in the ROM 72, the storage unit 79, or the like.

### <3. Color Conversion Processing Using LUT>

Control processing of the information processing device 70 of the present embodiment applicable to virtual production will be described.

Note that the video captured by the camera 502 by the above-described virtual production imaging system 500 is referred to as a "captured video vC". Normally, the range of the subject included in the video of the captured video vC is similar to that of the monitor video vM. Then, the captured video vC is obtained by imaging an object such as the performer 510 and the background video vB of the LED wall 505 by the camera 502.

Furthermore, in the present disclosure, the "background video vB" is a general term for a video displayed on the display such as the LED wall 505 and video data thereof, but hereinafter, in particular, digital data of the background video vB generated by rendering and input to the display is referred to as "background video data DvB" in the sense of distinction from the background video vB to be displayed.

In a case where the background video vB and objects such as the performer 510 and objects are captured by the camera 502 as in the virtual production, the color of the video data of the captured video vC is different from the color of the background video data DvB of the original background video vB. This is because the color of the background video data DvB is converted by the light emission characteristics of the display such as the LED wall 505 and the characteristics of the camera 502.

Note that the characteristics of the camera 502 are characteristics of a lens of the camera 502 and characteristics of a change in color caused by an image sensor or signal processing in the camera 502.

In order to eliminate the discomfort caused by this, in the present embodiment, color conversion processing is performed at the time of imaging.

Fig. 9 illustrates a part of the imaging system 500 described with reference to Fig. 5, for example. Note that, hereinafter, the display device that displays the background video vB such as the LED wall 505 (LED panel 506) is collectively referred to as a "display 21". Note that the display 21 may not necessarily be in the form of the LED wall 505.

Fig. 9 illustrates the rendering engine 520, the display 21, the light 580, the performer 510, and the camera 502. This schematically illustrates a state in which the background video vB based on the background video data DvB generated by the rendering engine 520 is displayed on the display 21 and captured by the camera 502 together with the performer 510. Note that the display controller 590, the LED processor 570, and the like in Fig. 5 are omitted.

In the case of the example of Fig. 9, the rendering engine 520 has a function as the color conversion unit 521.

The color conversion unit 521 performs color conversion using the 3D-LUT 10 (hereinafter, simply referred to as the "LUT 10") that is table information reflecting inverse characteristics of the characteristics of the display 21.

That is, the rendering engine 520 causes the color conversion unit 521 to color-convert the generated background video data DvB, and supplies the background video data DvB after the color conversion to the display 21 so that the background video vB is displayed.

Fig. 10 illustrates a part of the imaging system 500 similarly to Fig. 9, but is an example in which the rendering engine 520 and the color conversion unit 521 are configured separately. For example, as a device such as a set top box, a computer device, a tablet, or a smartphone, the color conversion unit 521 is provided in a device separate from the rendering engine 520.

The rendering engine 520 supplies the generated background video data DvB to the color conversion unit 521 which is a separate device. The color conversion unit 521 performs color conversion on the input background video data DvB using the LUT 10. Then, the color-converted background video data DvB is supplied to the display 21 so that the background video vB is displayed.

In each configuration of Figs. 9 and 10, the background video vB based on the background video data DvB color-converted by the LUT 10 and the object such as the performer 510 in the performance area 501 illuminated by the light 580 are both captured by the camera 502.

Then, since the color conversion processing using the LUT 10 is processing of giving inverse characteristics of the light emission characteristics of the display 21, in the captured video vC captured by the camera 502, the video data of the background video portion does not change due to the light emission characteristics of the display 21.

Furthermore, the LUT 10 can also be configured to reflect inverse characteristics of characteristics obtained by combining the characteristics of the display 21 and the characteristics of the camera 502 that captures the background video vB. Then, in the captured video vC captured by the camera 502, the video data of the background video portion does not change due to the light emission characteristics of the display 21 and the characteristics of the camera 502.

Since the LUT 10 is the table information reflecting such inverse characteristics, when the background video vB subjected to the color conversion by the LUT 10 is displayed, the color change of the background portion in the captured video vC is reduced or canceled, and the captured video vC without discomfort can be obtained.

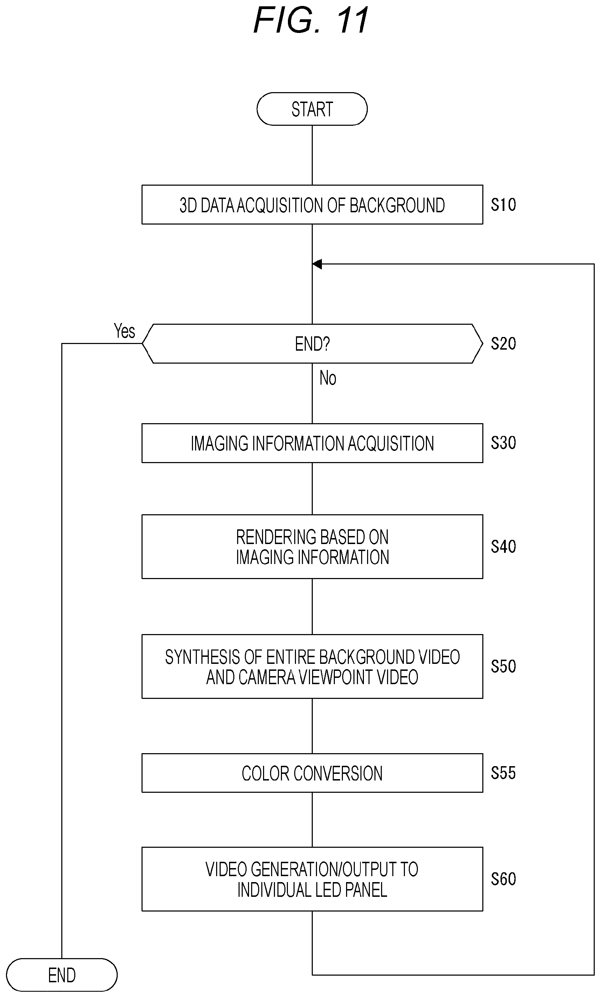

Fig. 11 illustrates a processing example performed by the imaging system 500 to which the color conversion processing has been applied. Note that Fig. 11 is obtained by adding step S55 to the processing described with reference to Fig. 6. The steps described in Fig. 6 are briefly described.

In step S10, the rendering engine 520 reads the 3D background data to be used this time from the asset server 530, and develops the 3D background data in an internal work area. Then, a video used as the outer frustum is generated.

Thereafter, the rendering engine 520 repeats the processing from step S30 to step S60 at each frame timing of the background video vB until it is determined in step S20 that the display of the background video vB based on the read 3D background data is ended.

In step S30, the rendering engine 520 acquires the imaging information from the camera tracker 560 and the camera 502.

In step S40, the rendering engine 520 performs rendering on the basis of the imaging information.

In step S50, the rendering engine 520 performs processing of synthesizing the outer frustum, which is the entire background video, and the video reflecting the viewpoint position of the camera 502, that is, the capturing region video vBC. As a result, the background video data DvB for displaying the background video vB of the current frame is generated.

In step S55, the color conversion unit 521 (see Fig. 9) in the rendering engine 520 or the color conversion unit 521 (see Fig. 10) separate from the rendering engine 520 performs color conversion processing using the LUT 10 on the background video data DvB.

In step S60, the rendering engine 520 or the display controller 590 generates the divided video signal nD obtained by dividing the background video data DvB of one frame after the color conversion processing into the videos displayed on the individual LED panels 506, and transmits each divided video signal nD to each LED processor 570.

By the above processing, the background video vB captured by the camera 502 is displayed on the LED wall 505 at each frame timing.

Then, since the background video vB of each frame is a video after the color conversion processing in the color conversion unit 521 is performed, the captured video vC is suppressed from changing in color due to the characteristics of the display 21 and the camera.

### <4. LUT Creation Processing>

Next, processing of creating the LUT 10 for performing the color conversion processing as described above will be described.

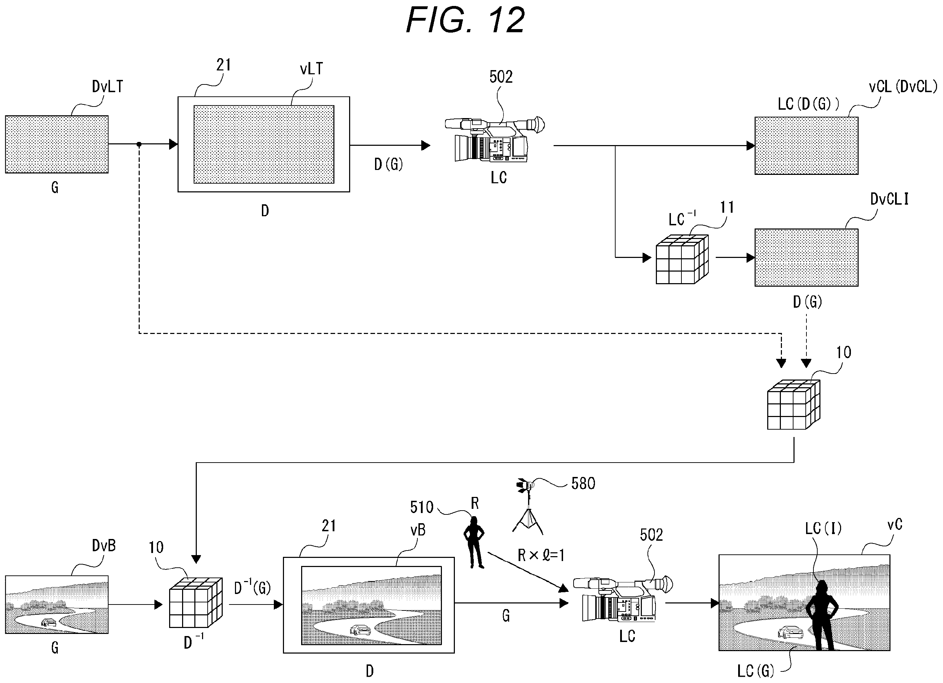

In Fig. 12, the upper part illustrates a process up to creation of the LUT 10, and the lower part illustrates a process of imaging including color conversion processing using the LUT 10.

In the upper part of Fig. 12, the LUT creation video data DvLT and the LUT creation video vLT are illustrated. As will be described in detail later, the LUT creation video data DvLT is video data which is supplied to the display 21 to display a video similarly to the background video data DvB, and the LUT creation video vLT is a video displayed on the display 21.

The LUT creation video vLT is a video to be displayed on the display 21 for creating the LUT 10.

In Fig. 12, the LUT creation video vLT and the background video vB are expressed as "G".

When the LUT 10 is created, the LUT creation video data DvLT is supplied to the display 21, and the LUT creation video vLT is displayed on the display 21. At this point, the light emission characteristics of the display 21 is set to "D".

Then, the LUT creation video vLT displayed on the display 21 can be expressed as "D (G)". That is, the color change "D ()" due to the light emission characteristics D are added to the video compared with the originally intended video based on the original LUT creation video data DvLT.

When the LUT creation video vLT displayed on the display 21 is captured by the camera 502, the captured video can be expressed as "LC (D (G))" because the characteristics "LC" of the camera 502 are added. Note that the "LC" is characteristics obtained by combining the lens characteristics of the camera 502 and the characteristics of the camera itself (characteristics of color change due to image sensor or signal processing).

Hereinafter, the video captured by the camera 502 at the time of creating the LUT is referred to as a "creation-time captured video vCL" in order to be distinguished from the captured video vC at the time of capturing the actual content video. Furthermore, the video data is referred to as "creation-time captured video data DvCL".

Here, the inverse conversion LUT 11 that reflects inverse characteristics to the characteristics "LC" of the camera 502 is used. The inverse conversion LUT 11 is created on the assumption that characteristics "LC" of the camera 502 are measured in advance and conversion of the inverse characteristics "LC^(-1)" is performed. Note that "^-1" means to the power of -1, and represents inverse conversion here.

Then, the created inverse conversion LUT 11 is only required to be stored in any storage medium in the imaging system 500, such as in the camera 502 or in an LUT creation module 30 to be described later.

As described above, the color conversion is performed on the creation-time captured video data DvCL represented by "LC (D (G))" using the inverse conversion LUT 11, whereby the video data DvCLI in which the characteristics of the camera are canceled can be obtained.

The video data DvCLI can be expressed as "D (G)".

Then, by comparing the original LUT creation video data DvLT represented by "G" with the video data DvCLI represented by "D (G)", it is possible to create the LUT having the conversion characteristics of "D^-1" that convert "D (G)" into "G".

The LUT that performs the conversion of "D^-1" is the above-described LUT 10.

The background video data DvB illustrated in the lower part of Fig. 12 is background video data DvB generated in steps S40 and S50 of Fig. 11 at the time of actual imaging.

The color conversion processing is performed on the background video data DvB in step S55 in Fig. 11, and this is conversion using the LUT 10 in the lower part of Fig. 12. The converted background video data DvB can be expressed as "D^-1 (G)"**.** The background video data DvB is supplied to the display 21 and displayed as the background video vB.

At this time, the characteristics "D" of the display 21 are added, but since the background video data DvB is "D^-1 (G)", the background video vB displayed on the display 21 is "G" in which the characteristics "D" are canceled.

The characteristics of the performer 510 and the like as the foreground are "I". "I" is a combination of characteristics "l" of illumination by the light 580 and characteristics "R" due to reflection of an object such as the performer 510 (I = l • R). Then, the characteristics "LC" of the camera 502 are added to the captured video vC by the camera 502, and the background as LC (G) and the foreground as LC (I) are obtained. In this case, the characteristics "LC" of the camera are equally included in the background and the foreground.

In the above example, the created LUT 10 has a "D^-1" conversion characteristics. That is, the LUT 10 is generated by using the video data DvCLI obtained by removing the camera characteristics "LC" using the inverse conversion LUT 11 and the original LUT creation video data DvLT, so that the LUT 10 is table information reflecting the inverse characteristics of the characteristics "D" of the display 21.

By doing so, it is possible to meet the request of the user to leave the camera characteristics "LC" in the captured video vC at the time of capturing.

On the other hand, in a case where it is not necessary to leave the camera characteristics "LC" in the captured video vC, the LUT 10 is only required to be table information reflecting inverse characteristics of characteristics obtained by combining the characteristics "D" of the display 21 and the characteristics "LC" of the camera.

That is, the LUT 10 can be converted into the table information of the conversion characteristics of "LC (D (G))" by the generation using the creation-time captured video data DvCL of "LC^-1 (D^-1)" and the original LUT creation video data DvLT in the upper part of Fig. 12.

In this case, the characteristics "D" of the display 21 are canceled and the background video vB displayed at the time of actual imaging becomes "LC^-1 (G)", and furthermore, the camera characteristics "LC" are canceled and the background video vB becomes "G" in the captured video vC imaged by the camera 502.

As a result, in the captured video vC, a background having a color more true to the original image can be obtained.

The creation and use of the LUT 10 have been described above, and the LUT creation module (LCM) 30 functioning as a table information creation unit that creates such an LUT 10 will be specifically described.

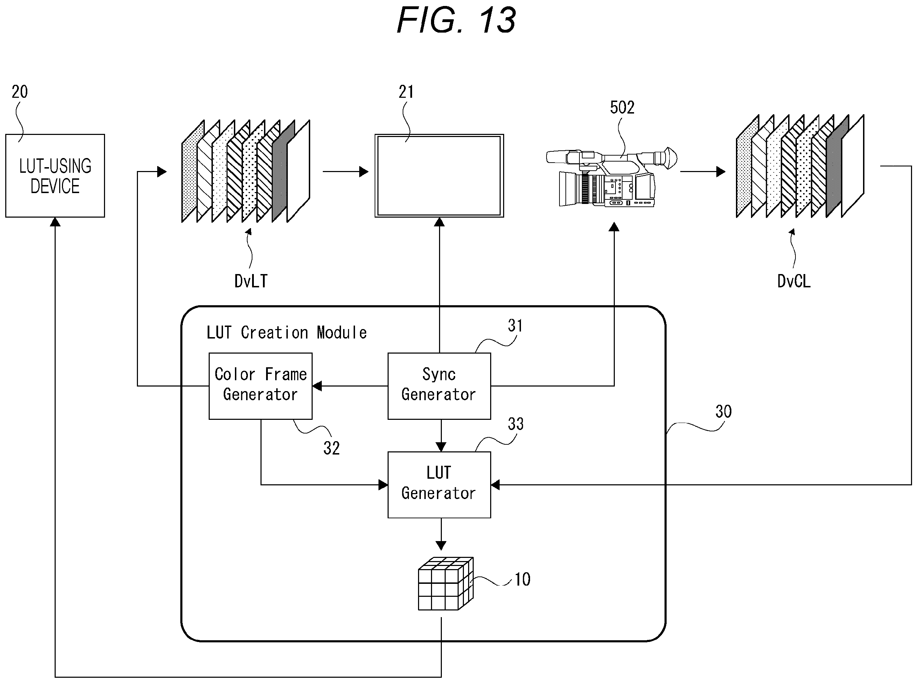

Fig. 13 illustrates an overall image of a system using the LUT creation module 30. First, the operation of the LUT creation module 30 will be roughly described.

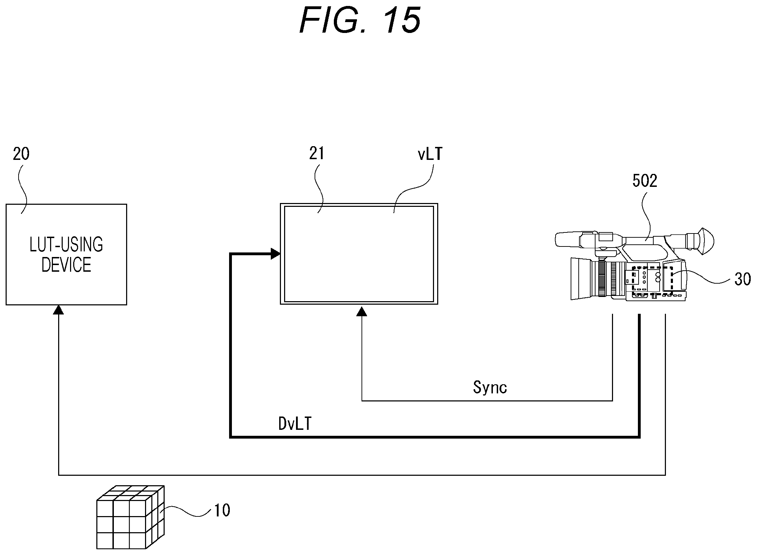

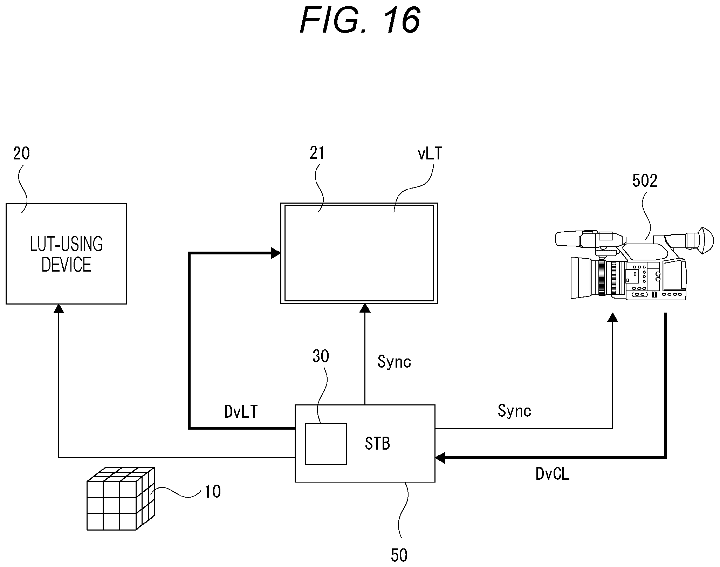

The LUT creation module 30 may be mounted on the camera 502 as illustrated in Fig. 15 to be described later, or may be provided in a device separate from the camera 502 as in a set top box 50 in Fig. 16. The separate device may be, for example, a device dedicated to the LUT creation module, a computer device such as a smartphone or a tablet, or the rendering engine 520.

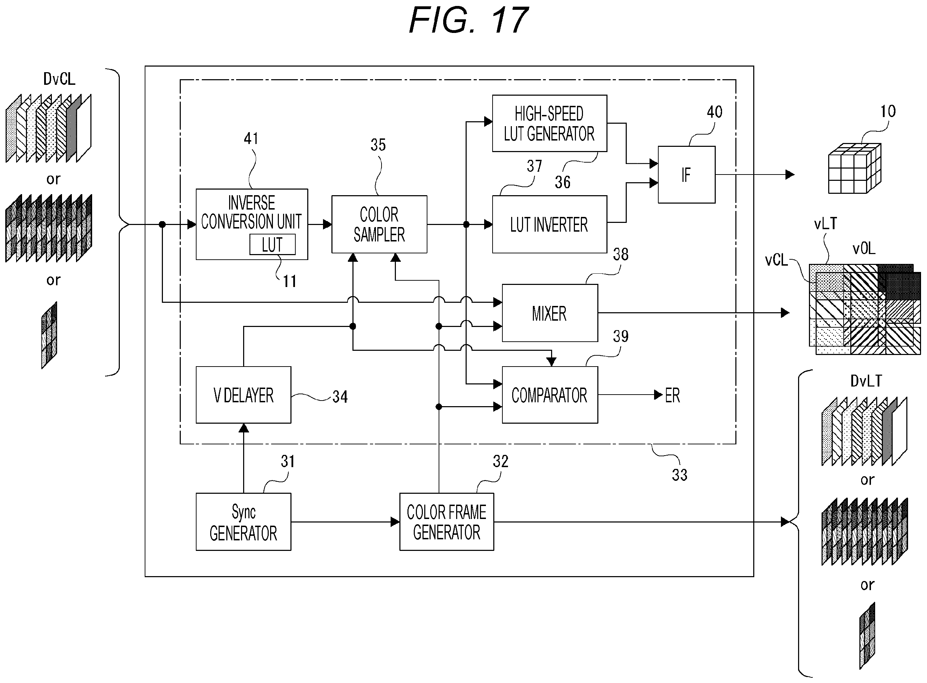

As illustrated in Fig. 13, the LUT creation module 30 has functions of a sync generator 31, a color frame generator 32, an LUT generator 33, and the like. Note that a detailed configuration example of the LUT creation module 30 will be described later with reference to Fig. 17.

The color frame generator 32 generates video data of one or a plurality of frames as the LUT creation video data DvLT. The LUT creation video data DvLT is, for example, video data of a plurality of frames in which one frame has one color different from each other, video data of a plurality of frames in which one frame is a video including a plurality of colors, or video data of one frame including a plurality of colors.

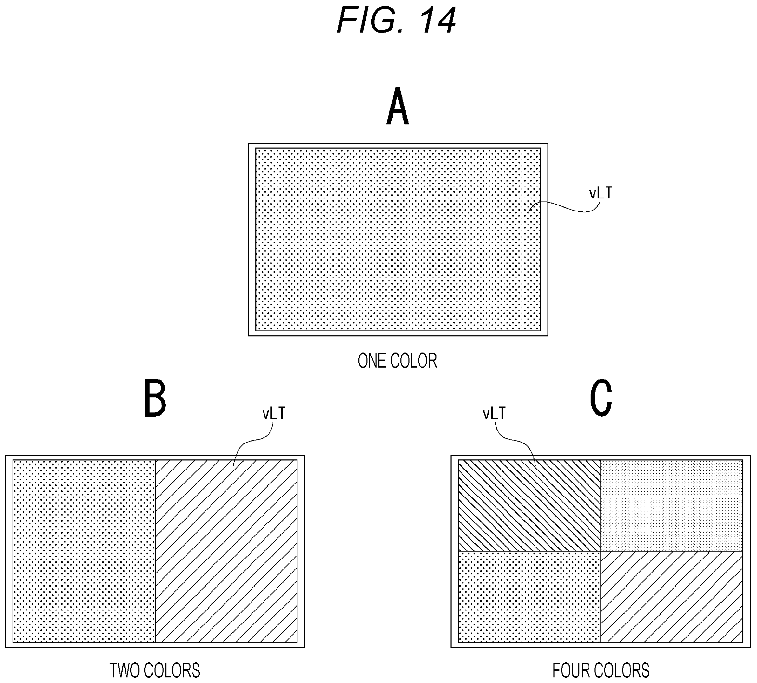

For example, Fig. 14A illustrates an example in which one color is displayed on the entire screen in one frame as the LUT creation video vLT. The frames are videos of different colors.

In addition, as the LUT creation video vLT, Fig. 14B illustrates an example in which two colors are displayed in one frame, and Fig. 14C illustrates an example in which four colors are displayed in one frame. In the case of two colors, one color is displayed on each of the left half and the right half of the screen, or the upper half and the lower half are displayed separately. In the case of four colors, for example, the screen is divided by a cross, and different colors are displayed at the upper left, the upper right, the lower left, and the lower right. Of course, more colors may be displayed in one frame. In either case, there is no color overlap between the frames.

The number of frames and video content of the LUT creation video vLT differ depending on the LUT creation method as described later.

The LUT creation video data DvLT by the color frame generator 32 is supplied to the display 21 and displayed as the LUT creation video vLT on the display 21. In the case of a plurality of frames, the video of each frame is sequentially displayed.

The LUT creation video data DvLT output by the color frame generator 32 is video data for displaying the patch color of the Macbeth chart, the color of the grid point of the 3D-LUT 10, or the like.

In the case of the Macbeth chart, since it is sufficient to image 24 frames, high-speed processing is performed, but calibration accuracy is relatively low.

On the other hand, for example, as illustrated in Fig. 14A, in a case where the color of each grid point of the 33 grid 3D-LUT is associated with one color per frame, the LUT creation video vLT is 35937 frames of 33 × 33 × 33 in total, and more accurate calibration can be performed although it takes time.

In this case, the time required to display all frames is about 25 minutes at 24 FPS and about 5 minutes at 120 FPS.

When a plurality of colors is displayed per frame as illustrated in Figs. 14B and 14C, the number of frames required to display the colors of the grid points of the 33 grid 3D-LUT can be reduced, and the time required to display all frames can be shortened.

The sync generator 31 outputs a synchronization signal (Sync) to the display 21 and the camera 502. As a result, the video of each frame of the LUT creation video vLT is captured by the camera 502.

The camera 502 captures the LUT creation video vLT displayed on the display 21, and outputs the LUT creation video vLT to the LUT creation module 30 as creation-time captured video data DvCL.

In the LUT generator 33, the LUT creation module 30 generates the LUT 10 using the LUT creation video data DvLT and the corresponding creation-time captured video data DvCL.

In this case, the sync generator 31 synchronizes the display 21 with the camera 502, and also controls processing timings of the color frame generator 32 and the LUT generator 33. As a result, the LUT generator 33 can associate the frame of the LUT creation video data DvLT with the frame of the creation-time captured video data DvCL corresponding to each frame. That is, the same color can be compared between the color before display on the display 21 and the color after imaging. As a result, the LUT generator 33 can correctly generate the LUT 10.

Then, the LUT generator 33 transmits the generated LUT 10 to the LUT-using device 20. The LUT-using device 20 refers to a device that performs color conversion of the background video data DvB using the LUT 10 at the time of actual imaging. Examples of the device include the rendering engine 520 in Fig. 9 and the color conversion unit 521 in Fig. 10.

A device having a function as the color conversion unit 521 is the LUT-using device 20, and may be a device such as a PC, a smartphone, or a tablet.

In addition, communication of the LUT 10 from the LUT creation module 30 to the LUT-using device 20 may be performed by wired communication or wireless communication.

Fig. 15 illustrates such example in which the LUT creation module 30 is incorporated in the camera 502. The camera 502 outputs a synchronization signal (Sync) from the built-in LUT creation module 30 to the display 21 so that the camera 502 and the display 21 are synchronized with each other.

The camera 502 outputs the LUT creation video data DvLT from the built-in LUT creation module 30 to the display 21 to display the LUT creation video vLT, and captures the LUT creation video vLT displayed on the display 21.

After capturing all the frames of the LUT creation video vLT, the camera 502 generates the LUT 10 by the built-in LUT creation module 30, and transmits the generated LUT 10 to the LUT-using device 20.

By incorporating the LUT creation module 30 in the camera 502 in this manner, the creation work of the LUT 10 becomes easy.

Fig. 16 illustrates a case where a device including the LUT creation module 30 is prepared as the set top box 50 separate from the camera 502.

In this case, the LUT creation module 30 incorporated in the set top box 50 outputs a synchronization signal (Sync) to the camera 502 and the display 21 so that the camera 502 and the display 21 are synchronized with each other.

Then, the set top box 50 outputs the LUT creation video data DvLT from the built-in LUT creation module 30 to the display 21 to display the LUT creation video vLT.

The camera 502 captures the LUT creation video vLT displayed on the display 21, and transmits the creation-time captured video data DvCL to the set top box 50.

After inputting all the frames of the creation-time captured video data DvCL from the camera 502, the set top box 50 generates the LUT by the built-in LUT creation module 30 and transmits the LUT 10 to the LUT-using device 20.

In this way, by providing the LUT creation module 30 by the set top box 50 separated from the camera 502, the LUT 10 can be created even in the imaging system 500 using the existing camera 502.

The configuration and operation of the LUT creation module 30 will be described in detail.

Fig. 17 illustrates a functional configuration of the LUT creation module 30. This illustrates the configuration of the LUT generator 33 in Fig. 13 in detail.

Fig. 17 illustrates a configuration example in which the LUT creation in the high accuracy mode and the LUT creation in the high speed mode can be performed.

The high accuracy mode is a method of creating the LUT 10 using an enormous amount of LUT creation video data DvLT such as 35937 frames described above.

Unlike the high accuracy mode, the high speed mode does not require an enormous amount of video data, and is a method of creating the LUT 10 using the LUT creation video data DvLT of one frame.

Note that Fig. 17 also illustrates modules used only in the high accuracy mode or only in the high speed mode. Therefore, in a case of configuring the LUT creation module 30 that creates an LUT only in the high accuracy mode or only in the high speed mode, there is also a function that becomes unnecessary.

Fig. 17 illustrates a V delayer 34, a color sampler 35, a high-speed LUT generator 36, an LUT inverter 37, a mixer 38, a comparator 39, an interface 40, and an inverse conversion unit 41 as configurations corresponding to the LUT generator 33 in addition to the sync generator 31 and the color frame generator 32 described in Fig. 13.

The color frame generator 32 outputs the RGB values of the grid point positions in the 3D-LUT created as described above to a serial digital interface (SDI), a high-definition multimedia interface (HDMI: registered trademark), or the like in units of one frame. This is the above-described LUT creation video data DvLT. As illustrated, the LUT creation video data DvLT may be one frame color or a plurality of colors per frame. As an example of a plurality of colors for one frame, an example in which nine colors are displayed in one frame is illustrated.

For convenience of illustration, it is not possible to clearly illustrate the difference in color, but for example, in a case where a 33 grid 3D-LUT is created, in a case of one frame and one color, the LUT creation video data DvLT is 35937 frame video data. Thus, each color of the 35937 grid points is represented.

The LUT creation video vLT based on the LUT creation video data DvLT is displayed on the display 21, captured by the camera 502, and input as the creation-time captured video data DvCL in Fig. 17.

The inverse conversion unit 41 is a module that performs color conversion using the inverse conversion LUT 11.

Each frame of the creation-time captured video data DvCL is subjected to color conversion by the inverse conversion unit 41 using the inverse conversion LUT 11.

As described in Fig. 12, the inverse conversion LUT 11 is a 3D-LUT reflecting an inverse characteristics to the characteristics LC of the camera 502. As a result, the video data DvCLI illustrated in Fig. 12 is obtained and input to the color sampler 35.

Note that, as described above, color conversion by the inverse conversion LUT 11 may not be performed in some cases. This is a case of creating the LUT 10 used in a case where it is not necessary to leave the camera characteristics "LC" in the captured video vC. In this case, the creation-time captured video data DvCL is directly input to the color sampler 35.

The color sampler 35 performs noise reduction processing or the like on the video data DvCLI (or the creation-time captured video data DvCL) color-converted by the inverse conversion LUT 11, and samples a certain position in the image. Then, the sample value is written to the RAM address corresponding to the RGB value from the color frame generator 32.

As a result, the color sampler 35 generates the 3D-LUT in which the video data DvCLI (or the creation-time captured video data DvCL) and the original LUT creation video data DvLT are associated with each other. Note that this 3D-LUT is an LUT in the process of creating the LUT 10 to be output.

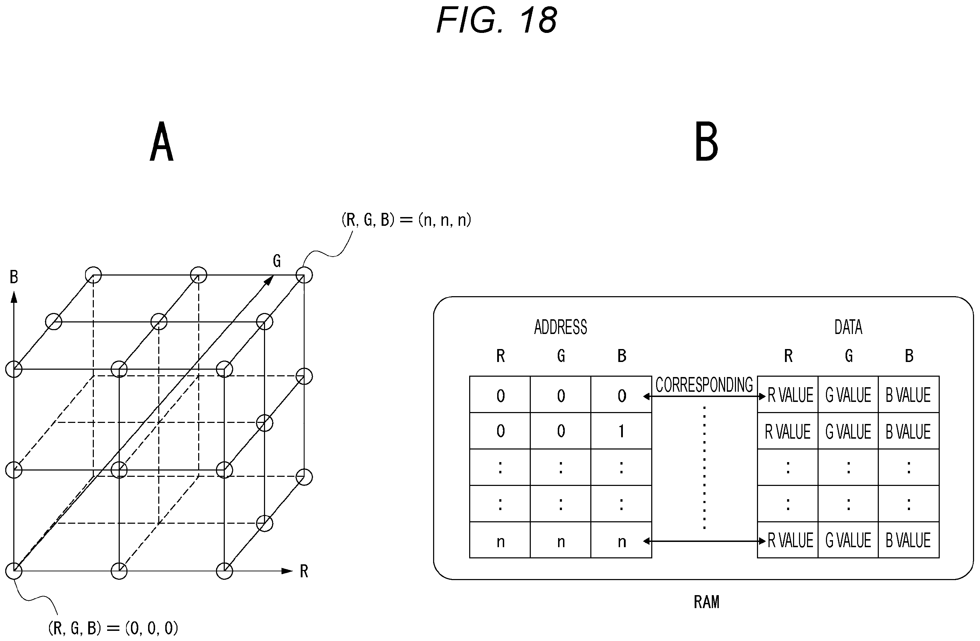

Figs. 18A and 18B schematically illustrate a relationship between the 3D-LUT and the RAM. Fig. 18A illustrates three axes (R-axis, B-axis, G-axis) in the 3D-LUT, and illustrates grid points by "o". Fig. 18B illustrates correspondence between an address corresponding to a grid point and RGB data stored in the address.

The color sampler 35 associates the coordinates of each grid point of the n × n × n 3D-LUT with an address in the built-in RAM. Then, the R value, the G value, and the B value sampled from the video data DvCLI (or the creation-time captured video data DvCL) are stored in the address of the RAM as illustrated in the drawing. In the example of the drawing, the address is incremented with reference to "B", but may be incremented with reference to "R" or "G".

For example, in a case where the LUT creation video vLT of one frame and one color is used, the color sampler 35 samples one point near the center in the frame.

In addition, in a case where the LUT creation video vLT of one frame and a plurality of colors is used, the color sampler 35 samples the vicinity of the center of the region of each color according to the number of colors.

Then, the color sampler 35 performs a process of storing the sampled RGB values in the RAM address corresponding to the RGB values from the original color frame generator 32.

For such processing by the color sampler 35, the sync generator 31 generates a synchronization signal for the color sampler 35 and the color frame generator 32.

The V delayer 34 delays a synchronization signal for the color sampler 35 by a predetermined time and supplies the synchronization signal to the color sampler 35.

This is to correspond to the difference between the output timing of a certain frame of the LUT creation video vLT by the color frame generator 32 and the input timing of the video data DvCLI (or the creation-time captured video data DvCL) corresponding to the frame to the color sampler 35. That is, the synchronization signal is delayed by a time until a certain video is output from the LUT creation module 30, displayed, captured, and input to the LUT creation module 30.

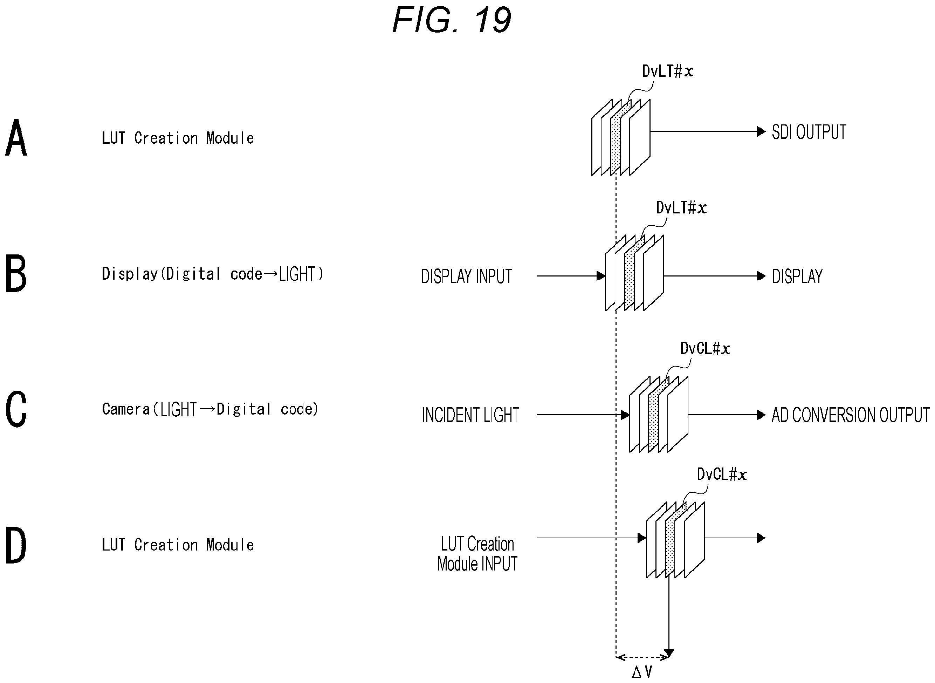

Fig. 19 illustrates a timing relationship.

Fig. 19A illustrates each frame of the LUT creation video data DvLT output from the LUT creation module 30. Attention is paid to the hatched frame DvLT #x.

As illustrated in Fig. 19B, a delay occurs until the frame DvLT #x is input to the display 21 and displayed and output.

Furthermore, as illustrated in Fig. 19C, a delay occurs until the video of the frame DvLT #x is incident on the camera 502, photoelectrically converted by the image sensor, further converted from an analog signal to digital data, and output as the frame DvCL #x of the creation-time captured video data DvCL.

Furthermore, as illustrated in Fig. 19C, a delay occurs until the frame DvCL #x of the creation-time captured video data DvCL is input to the color sampler 35 and written to the address of the above-described RAM.

As a result, a frame delay indicated by a time ΔV occurs until the video is output from the LUT creation module 30, displayed, captured, and input to the LUT creation module 30. Therefore, the synchronization signal is delayed by the V delayer 34 according to the time ΔV. As a result, the RGB values of the corresponding video can be stored in the RAM address corresponding to the RGB values from the color frame generator 32.

The color sampler 35 outputs the RGB value and the address written in the RAM to the LUT inverter 37 or the high-speed LUT generator 36 according to the high accuracy mode or the high speed mode.

The LUT inverter 37 creates a 3D-LUT having inverse characteristics of the 3D-LUT created by the color sampler 35.

The high-speed LUT generator 36 is a module that creates an LUT from the colors sampled in the high speed mode.

The interface 40 outputs the 3D-LUT created by the LUT inverter 37 or the high-speed LUT generator 36, that is, the LUT 10 to the LUT-using device 20.

The mixer 38 is a module that mixes videos for color alignment in a case of a plurality of colors for one frame.

The comparator 39 is a module that compares colors and detects an error in LUT creation.

In the above configuration, the modules used in both the high accuracy mode and the high speed mode are the color frame generator 32, the inverse conversion unit 41, the color sampler 35, the interface 40, the mixer 38, and the comparator 39.

The modules used only in the high accuracy mode are the LUT inverter 37, the sync generator 31, and the V delayer 34. Therefore, in a case where the LUT creation module 30 performs only the operation in the high speed mode, the LUT inverter 37, the sync generator 31, and the V delayer 34 are unnecessary.

The module used only in the high speed mode is the high-speed LUT generator 36. Therefore, in a case where the LUT creation module 30 performs only the operation in the high accuracy mode, the high-speed LUT generator 36 is unnecessary.

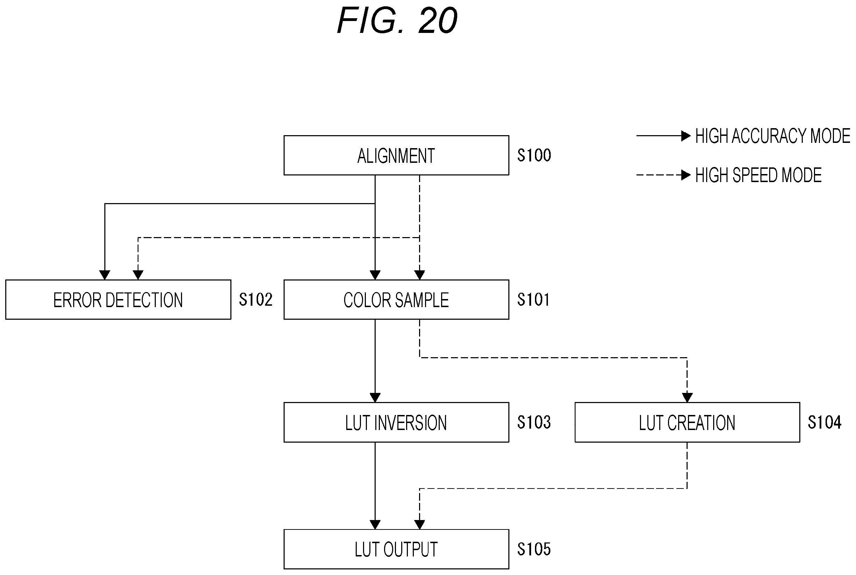

The operations in the high accuracy mode and the high speed mode will be described with reference to the flowchart of Fig. 20.

In Fig. 20, the progress of the processing in the high accuracy mode is indicated by a solid line, and the progress of the processing in the high speed mode is indicated by a broken line.

In the high accuracy mode, the LUT creation module 30 first performs the alignment in step S100, and then performs the color sample in step S101 and the error detection in step S102 in parallel. When the color sample is completed, the LUT creation module 30 performs LUT inversion in step S103 and outputs the LUT 10 created in step S105.

First, processing in the high accuracy mode will be described.

### • Step S100: Alignment

This alignment is alignment of the display 21 and the camera 502, and is preparation work for executing processing of the LUT creation module 30.

The camera 502 images the display 21 so that the screen can be appropriately captured. That is, in order to capture the LUT creation video vLT displayed on the display 21 and obtain the creation-time captured video data DvCL that can be compared in color with the LUT creation video data DvLT, the arrangement of the camera 502 with respect to the display 21 is adjusted.

Here, in a case where the LUT creation video vLT of one frame and a plurality of colors is used, accuracy of alignment is required. Therefore, the LUT creation module 30 generates and outputs the alignment video vOL by the mixer 38 so that the staff can adjust the camera position, the angle of view, the imaging direction, and the like while viewing the alignment video vOL. Alternatively, the position and orientation of the display 21 side may be adjusted.

For alignment, the color frame generator 32 outputs the LUT creation video data DvLT of a plurality of colors of one frame to the display 21 and the mixer 38. Note that, in this case, the LUT creation video data DvLT of one frame is only required to be continuously output as a still image. That is, still image display of a plurality of colors is only required to be performed on the display 21. The display 21 is captured by the camera 502.

The creation-time captured video data DvCL captured by the camera 502 is input to the LUT creation module 30, and the creation-time captured video data DvCL is also supplied to the mixer 38.

The mixer 38 overlays and combines the creation-time captured video data DvCL from the camera 502 with the LUT creation video data DvLT from the color frame generator 32 to generate the alignment video vOL. The alignment video vOL is output and displayed on an external display device so that the staff can visually recognize the alignment video vOL.

The alignment video vOL illustrated in Fig. 17 is exemplified as a video in which the LUT creation video vLT and the creation-time captured video vCL are slightly shifted. This means that the relative positional relationship between the camera 502 and the display 21 is not appropriate. The staff adjusts the relative positional relationship while viewing the alignment video vOL, and causes the positions of the LUT creation video vLT and the creation-time captured video vCL to substantially coincide with each other in the alignment video vOL. As a result, the regions of the plurality of colors in the frame coincide with each other, and the colors can be appropriately compared with each other.

Since it is difficult to avoid a decrease in the peripheral light amount of the lens and alignment to simultaneously display a plurality of colors or the like, it is preferable to use the LUT creation video vLT of one frame and one color, but in this case, the number of frames increases and it takes time.

By checking the alignment video vOL overlaid by the mixer 38, alignment can be relatively easily performed. As a result, the LUT creation video vLT of one frame and a plurality of colors can be easily used, and the processing time can be easily shortened.

### • Step S101: Color sample

After alignment is complete, the LUT creation module 30 executes color samples for actual 3D-LUT creation.

As described above, the color frame generator 32 supplies the LUT creation video data DvLT of a plurality of frames including one color of one frame or a plurality of colors of one frame to the display 21 so that the video of each frame is sequentially displayed.

The color sampler 35 samples the captured creation-time captured video data DvCL in association with the video data DvCLI (or the creation-time captured video data DvCL). As described above, the color value of the video data DvCLI (or the creation-time captured video data DvCL) is stored in the RAM on the basis of the address corresponding to the value of the LUT creation video data DvLT. The information of the 3D-LUT is configured as the correspondence relationship between the address of the RAM and the sample value.

For example, in a case where the LUT 10 for converting 35937 colors is created as a 3D-LUT of 33 × 33 × 33, samples of 35937 colors are performed as the color samples of step S101.

As described above, the 3D-LUT is created in the RAM of the color sampler 35 using the LUT creation video data DvLT corresponding to all grid points of the 3D-LUT and the creation-time captured video data DvCL that is imaged and returned. The characteristics from the output to the input are referred to as input/output characteristics.

In the case of one frame color, the sample value for the color is stored in the RAM in correspondence with the address of the color value of the LUT creation video data DvLT.

In the case of a plurality of colors in one frame, sample values for the respective colors in the frame are stored at different addresses. The address value is a value of each color in one frame of the LUT creation video data DvLT.

Timing of the LUT creation video data DvLT and the creation-time captured video data DvCL is adjusted by the sync generator 31 and the V delayer 34 as described above.

### • Step S102: Error detection

The LUT creation module 30 executes error detection by the comparator 39 during execution of the color sample in step S101.

For example, in a case where the camera 502 moves during the creation of the 3D-LUT, or in a case where something crosses in front of the camera 502, an incorrect color is sampled, and an incorrect 3D-LUT is created. In order to prevent this, a significant difference in color of each frame is detected by the comparator 39.

A value of a color (one color or a plurality of colors) sampled by the color sampler 35 is input to the comparator 39 for each frame.

In addition, the value of the color (one color or a plurality of colors) of the LUT creation video data DvLT for each frame from the color frame generator 32 is input to the comparator 39.

The comparator 39 adjusts the timing according to the value of the V delayer 34 and compares the difference in color value for the corresponding frame. The color values to be compared are different to some extent depending on the characteristics of the display 21 "D" and the characteristics of the camera "LC" described above, but in a case where the difference is too large, it can be estimated that an incorrect sample has been performed.

Therefore, a predetermined threshold value is set, and in a case where the difference between the corresponding color values is equal to or greater than the threshold value, it is determined that a sample error has occurred because the color difference is too large, and an error detection signal ER is output.

In the case of one frame of one color, a difference between the color values is determined, and if the value of the difference is equal to or greater than a threshold value, an error detection signal ER is output.

In the case of a plurality of colors for one frame, differences in color values are determined for all the colors, and if the difference value is equal to or greater than a threshold value for even one of the colors, an error detection signal ER is output. The reason why all colors are compared is that if there is an erroneous sample even in one color, the LUT 10 results in erroneous color conversion.

In a case where the error detection signal ER is output by the comparator 39, the LUT creation module 30 is only required to output a warning to a staff member or is only required to automatically suspend or stop the LUT creation processing.

### • Step S103: LUT inversion

When the color sample in step S101 is completed, the LUT creation module 30 generates the 3D-LUT in which the input/output characteristics of the 3D-LUT generated in the color sampler 35 are inverted by the LUT inverter 37. That is, it is the 3D-LUT that converts the color of the creation-time captured video vCL into the color of the LUT creation video vLT. The inverted 3D-LUT becomes the LUT 10 to be generated.

### • Step S105: LUT output

The LUT creation module 30 outputs the LUT 10 generated by the LUT inverter 37 as described above from the interface 40 to the outside. For example, the output is output to the LUT-using device 20.

In practice, the 3D-LUT data as the LUT 10 read from the LUT creation module 30 is converted into a 3D-LUT file such as cube by software or the like and used.

The processing of the LUT creation module 30 in the high accuracy mode is completed as described above.

Next, processing in the high speed mode will be described. As indicated by a broken line in Fig. 20, in the high speed mode, the LUT creation module 30 first performs the alignment in step S100, and then performs the color sample in step S101 and the error detection in step S102 in parallel. When the color sample is completed, the LUT is created in step S104, and the LUT 10 created is output in step S105.

Note that the alignment in step S100 and the error detection in step S102 are performed similarly to the high accuracy mode, and thus duplicate description is avoided.

### • Step S101: Color sample

In the case of the high speed mode, unlike the high accuracy mode, LUT creation video data DvLT of only one frame displayed in a plurality of colors in one frame is used.

The color sampler 35 samples the video of the LUT creation video data DvLT generated by the color frame generator 32 and the patches of the creation-time captured video data DvCL which is imaged by the camera 502 and returned.

The sampling is performed at coordinates in the screen on the assumption that the LUT creation video data DvLT and the creation-time captured video data DvCL are aligned in step S100 described above.

In the operation of the color sampler 35, RGB values of each color in one frame are sampled, and RGB values corresponding to the number of patches are stored in an internal register or RAM. Since only one frame is used, automatic management of timing as in the high accuracy mode is unnecessary.

### • Step S104: LUT creation

The LUT creation module 30 creates an LUT by the high-speed LUT generator 36 when the color samples in step S101 are completed.

The high-speed LUT generator 36 compares the RGB values of the respective colors of the original LUT creation video vLT with the RGB values of the respective colors of the creation-time captured video vCL sampled by the color sampler 35. Then, an RGB gain, a non-linear characteristic correction curve, and a matrix are generated such that the color of the creation-time captured video data DvCL matches the color of the LUT creation video data DvLT.

Specifically, a 1D-LUT reflecting an RGB gain and a non-linear characteristic correction curve and a matrix are generated.

Then, a color gamut conversion component is added to the above-described RGB gain, the non-linear characteristic correction curve, and the matrix to form a 3D-LUT. The 3D-LUT is the LUT 10 to be generated.

### • Step S105: LUT output

The LUT creation module 30 outputs the LUT 10 generated by the high-speed LUT generator 36 as described above from the interface 40 to the outside. For example, the output is output to the LUT-using device 20. The processing of the LUT creation module 30 in the high speed mode is completed as described above.

Although the LUT creation processing in the high accuracy mode and the high speed mode has been described above, various modification examples regarding LUT creation will be described below.

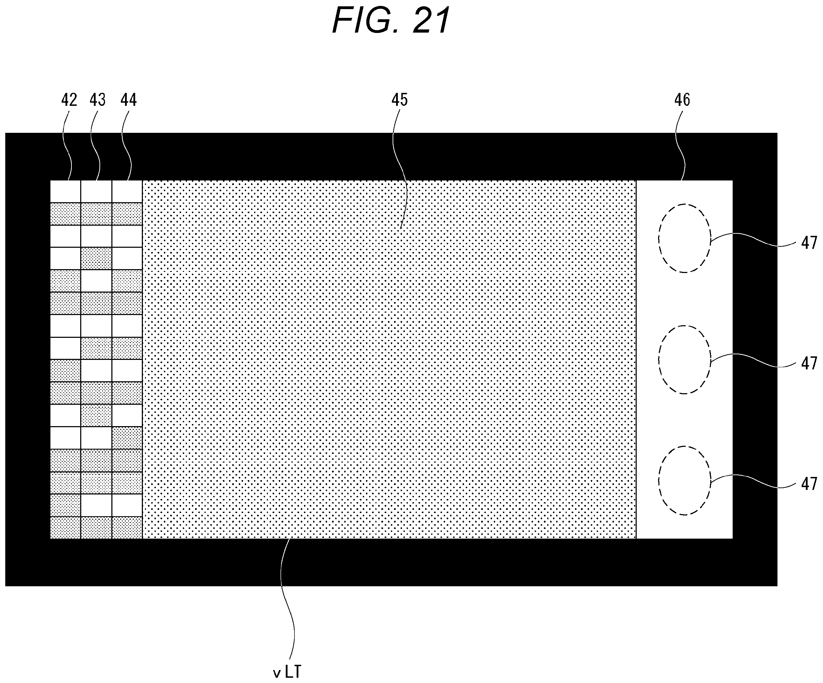

Fig. 21 illustrates an example of the LUT creation video vLT. This example eliminates the need for synchronization between devices.

It is assumed that the LUT creation video vLT displays the digital codes 42, 43, and 44 and the white patch 46 in addition to performing the color display 45 as a video.

As the color display 45, different colors corresponding to grid points of the 3D-LUT are displayed in each frame.

RGB values of the colors of the color display 45 are displayed as the digital codes 42, 43, and 44 at the left end of the screen. For example, in the case of 16 bit color, three rows of 16 vertical white and gray boxes are displayed in each of R, G, and B. The R value is displayed in 16 bits in the digital code 42, the G value in the digital code 43, and the B value in the digital code 44.

In this example, two colors of white and gray representing "1" and "0" are used, but other colors may be used.

The LUT creation module 30 can obtain the RGB values of the actually captured color only from the creation-time captured video data DvCL obtained by imaging such a video by sampling the color display 45, and can obtain the RGB values of the color of the original LUT creation video data DvLT from the digital codes 42, 43, and 44.

The white patch 46 at the right end of the screen is provided to prevent the LUT creation module 30 from erroneously recognizing the darkened boxes of the digital codes 42, 43, and 44 as gray in a case where a part of the digital codes 42, 43, and 44 becomes dark due to flicker or the like.

When the LUT creation module 30 reads the digital codes 42, 43, and 44, three sample points 47 are sampled vertically from the white patch 46. In this case, when there is a difference between the samples, it is determined that there is an imaging failure due to flicker or the like, and the imaging of the frame is performed again.

In a case where there is almost no difference between the sample points 47, it is determined that the frame is normal, and the color sampler 35 normally performs the color sample (step S101 in Fig. 20) for the frame.

In this example, sampling is performed at three sample points 47, but any number of points may be used. In addition, when the digital codes 42, 43, and 44 are displayed, the white patch 46 is not necessarily required.

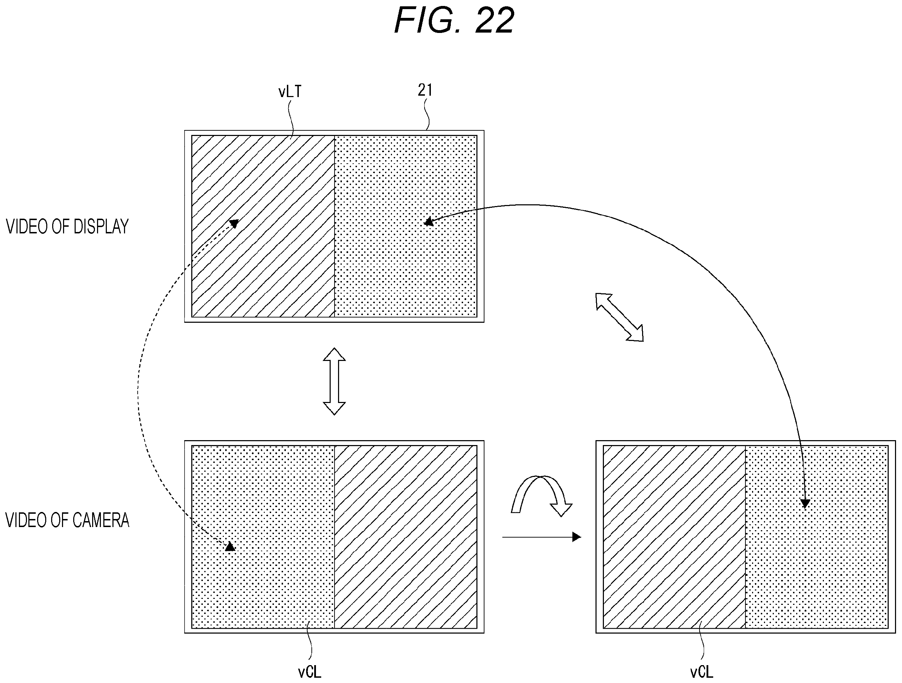

Next, automatic determination of the orientation of the video will be described with reference to Fig. 22.

As illustrated in Fig. 22, when the LUT creation video vLT of one frame and a plurality of colors (two colors in this example) is displayed, there may be a case where the display 21 is erroneously turned 180 degrees upside down and captured.

At the time of calculating the color in the creation-time captured video vCL after imaging by the camera 502, for example, in a case where ΔE (one of the indexes of the color difference) is too large for each color patch, the LUT creation module 30 automatically determines the reverse and compares the colors in a state of being rotated by 180 degrees. The determination is only required to be made by setting a threshold for ΔE.

As a result, it is possible to prevent that the accurate LUT 10 cannot be generated due to an arrangement error of the display 21.

Although an example of two colors in one frame is illustrated in the drawing, the present invention is also applicable to a case where the LUT creation video vLT has three or more colors in one frame.

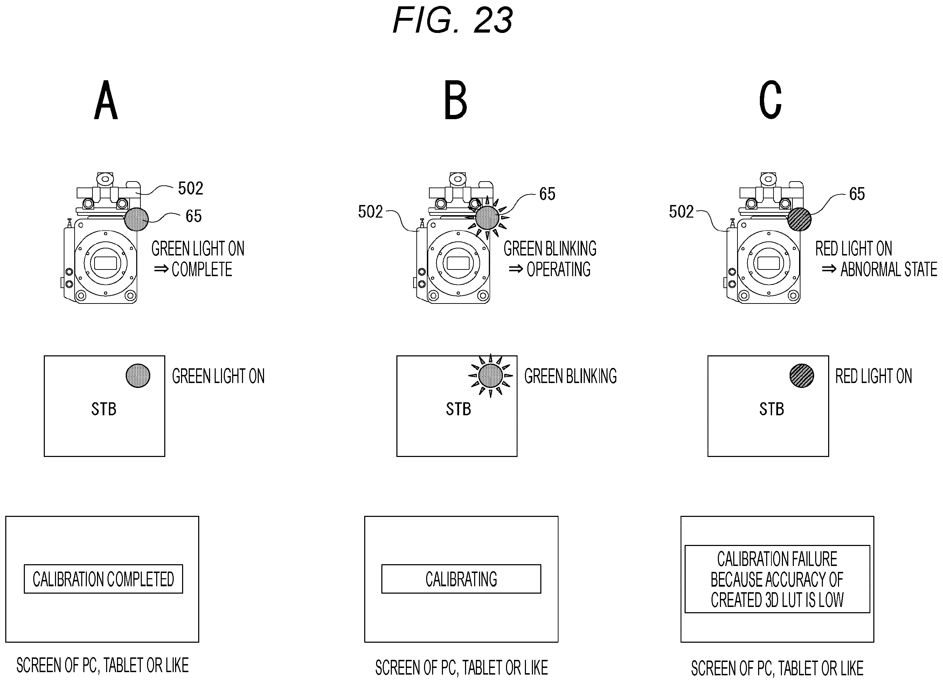

Next, an example of the tally lamp cooperation will be described with reference to Figs. 23A, 23B, and 23C. Each drawing illustrates an example of the state of a tally lamp 65 provided in the housing of the camera 502, the display of the monitor screen of the camera 502, and the display of a PC, a tablet, or the like. For example, an example is assumed in which the LUT creation module 30 is built in the camera 502, a PC, a tablet, or the like, and the state of the LUT creation operation of the LUT creation module 30 is displayed.

Note that the present invention can also be applied to a case where the operation of the LUT creation module 30 in the set top box 50 is displayed by a separate camera 502, PC, or the like without being built in the camera 502 or the like.

Fig. 23A is an example illustrating that the LUT creation operation is completed by turning on the tally lamp 65 in green and displaying characters and the like on a PC or a tablet.

Fig. 23B is an example illustrating that the LUT creation operation is being performed by green blinking of the tally lamp 65 and displaying characters and the like.

Fig. 23C is an example illustrating that some abnormal state such as the LUT 10 not being correctly created occurs by turning on the tally lamp 65 in red and displaying characters and the like.

The use of the tally lamp 65 and the display of characters and the like on the screen are not necessarily performed in a set.

Next, a hybrid mode that combines the processing of the high accuracy mode and the high speed mode will be described.

A high-speed and high-accuracy LUT 10 is created by a combination of the high accuracy mode and the high speed mode. Specifically, coefficients are created at a high speed in the high speed mode for the intermediate gradation, and coefficients are created in the high accuracy mode for the darkest portion and the lightest portion in which colors are likely to be shifted, and these coefficients are integrated to create the LUT 10 with high accuracy from the darkest portion to the lightest portion in a short time.

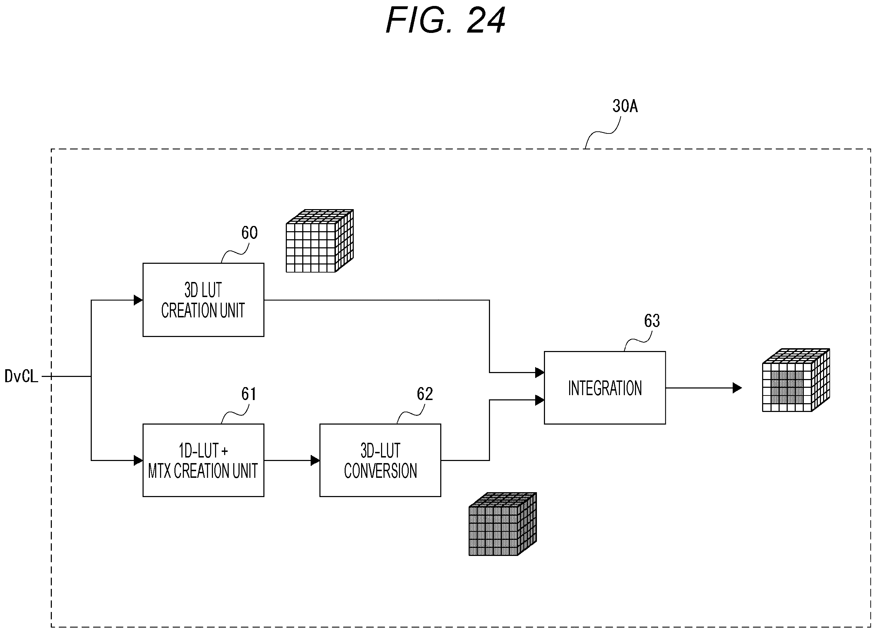

Fig. 24 illustrates a module configuration of an LUT creation module 30A for speeding up the creation of the LUT 10 in the hybrid mode. Note that Fig. 24 illustrates only portions corresponding to the functions of the color sampler 35, the LUT inverter 37, and the high-speed LUT generator 36 in Fig. 17.

The SD-LUT creation unit 60 performs processing in the high accuracy mode by the functions of the color sampler 35 and the LUT inverter 37 described above.

As described in the high speed mode by the color sampler 35 and the high-speed LUT generator 36 described above, the 1D-LUT and the matrix creation unit 61 perform processing of generating the 1D-LUT and the matrix by the RGB gain and the non-linear characteristic correction curve such that the color of the creation-time captured video data DvCL matches the color of the LUT creation video data DvLT.

The 3D-LUT conversion unit 62 performs the processing of generating the 3D-LUT using the processing 1D-LUT and the matrix described as the processing of the high-speed LUT generator 36 described above.

In this case, the SD-LUT creation unit 60 generates the 3D-LUT by finely sampling the ranges to be the darkest portion and the lightest portion in the processing of the high accuracy mode.

The 1D-LUT and the matrix creation unit 61 and the 3D-LUT conversion unit 62 generate the 3D-LUT in the high speed mode outside the range of the darkest portion and the lightest portion, that is, for the intermediate gradation portion.

The integration unit 63 integrates the 3D-LUT by the SD-LUT creation unit 60 and the 3D-LUT by the 3D-LUT conversion unit 62 in the intermediate gradation portion in the ranges to be the darkest portion and the lightest portion. Thus, the LUT 10 is created. Note that it is desirable to adopt converted data obtained by interpolating the boundary portion between the darkest portion and the lightest portion and the intermediate gradation portion.

In the above-described high accuracy mode, it is necessary to create a 3D-LUT having a large number of grid points in order to perform accurate calibration, but in this case, it takes a long time to display and capture colors corresponding to the total number of grid points.

On the other hand, even in the high-speed processing using the 1D-LUT and the matrix in the high speed mode, the colors match relatively well except for the darkest portion and the lightest portion. Therefore, in the intermediate gradation portions other than the darkest portion and the lightest portion, the 1D LUT and the matrix are created in the high speed mode, and only the darkest portion and the lightest portion are data finely captured in the high accuracy mode.

Then, the created 3D-LUT data is used as it is for the darkest portion and the lightest portion, a combination of the 1D-LUT and the matrix is used for the intermediate gradation portion, and the boundary portion is newly converted into the 3D-LUT in a form of smoothly connecting the data by linear interpolation or the like.

As a result, the generation of the LUT 10 can be shortened, and relatively high accuracy can be achieved.

Although the LUT 10 creation processing has been described above, according to the LUT creation processing of the present embodiment, the LUT 10 can be automatically created only by imaging the display 21 with the camera 502. This means that calibration (color matching) to the background video vB can be performed, and efficiency of the color matching work can be improved. As described with reference to Figs. 9, 10, and 11, the use of the LUT 10 can eliminate the occurrence of color discomfort at the time of imaging.

Note that, in a case where a change in the illumination environment, a secular change in the display 21, or the like occurs at the time of imaging, the LUT 10 is only required to be automatically created again.

In order to prevent a problem related to calibration, recording of the captured video vC cannot be started unless calibration of the camera 502 and the display 21 used for capturing is completed, whereby capturing in a state where colors do not match can be prevented.

Furthermore, it is desirable to perform some kind of warning at a stage where the LUT 10 appropriate for the current display 21 and camera 502 has not been created.

For example, as described with reference to Fig. 23C, in cooperation with the tally lamp or the like of the main body of the camera 502, it is possible to notify a situation such as calibration not being completed or not being appropriately executed.

In addition, the LUT creation module 30 may automatically check whether the created LUT 10 has been calibrated correctly, notify the user in the case of failure, and the user may select whether to re-create.

The technology of the embodiment can also be used for color matching between a plurality of cameras.

The LUT 10 is created by the plurality of cameras 502 having different characteristics with respect to the same display 21, and the characteristics of the LUTs 10 are compared, whereby the color conversion data (3D-LUT) that absorbs the difference in the characteristics between the cameras 502 can be created.

The technology of the embodiment can also be used for color matching between a plurality of displays.

By creating the LUTs 10 with the plurality of displays 21 having different characteristics for the same camera 502 and comparing the characteristics between the LUTs 10, color conversion data (3D-LUT) that absorbs a difference in characteristics between the displays 21 can be created.

### <5. Color Conversion Processing According to Imaging Condition Change>

As described with reference to Figs. 9, 10, and 11, processing in a case where an imaging condition is changed in a case where color conversion is performed by the LUT 10 at the time of imaging will be described.

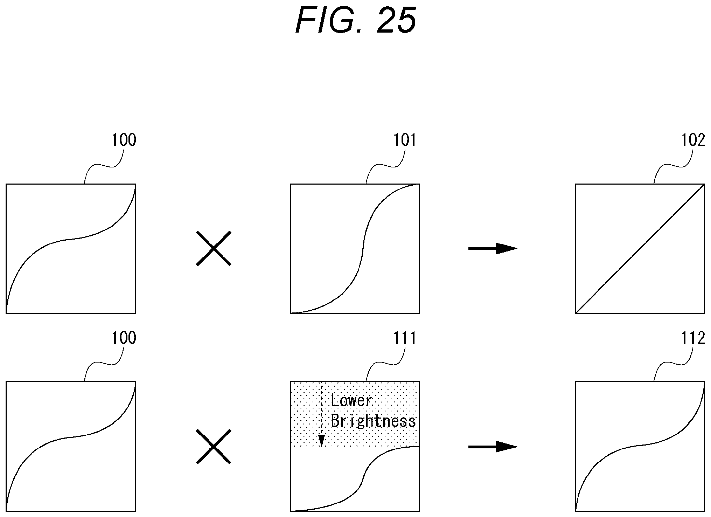

Fig. 25 illustrates support for luminance adjustment of the display 21 and white balance adjustment of the camera 502.

The luminance of the display 21 such as the LED wall 505 and the white balance of the camera 502 may be desired to be changed according to the scene. However, in a case where the luminance and white balance conditions are changed as compared with the time point at which the LUT 10 is created, the LUT 10 does not correspond to appropriate color conversion table information, and the assumed color correction effect cannot be obtained.

For example, the upper part of Fig. 25 illustrates the conversion characteristics of the LUT 10 as the calibration curve 100, and illustrates the curve of the light emission characteristics of the display 21 as the display linearity 101. Since the calibration curve 100 of the LUT 10 has inverse characteristics of the light emission characteristics of the display 21, the captured video vC having the linear characteristics 102 in which the light emission characteristics of the display 21 are canceled can be obtained by performing correction by the LUT 10 at the time of capturing.

However, it is assumed that the light emission luminance of the display 21 is reduced as illustrated in the lower part of Fig. 25 and the light emission characteristics of the display 21 are changed as illustrated as display linearity 111. Even if the color conversion is performed using the LUT 10 in which the original calibration curve 100 is maintained, the captured video vC does not have linear characteristics as indicated by the characteristics 112. That is, the effect of correcting the light emission characteristics of the display 21 cannot be obtained.

As such, the LUT 10 created under a particular brightness of the display 21 does not work with other brightness settings. That is, in order to correctly use the LUT 10, it is necessary to fix brightness and white balance.

On the other hand, the LUT 10 is devised so as to be used as it is even in a case where the brightness and the white balance are changed. As a result, even if the luminance of the display 21 or the white balance of the camera 502 is changed, appropriate color conversion can be performed using the LUT 10.

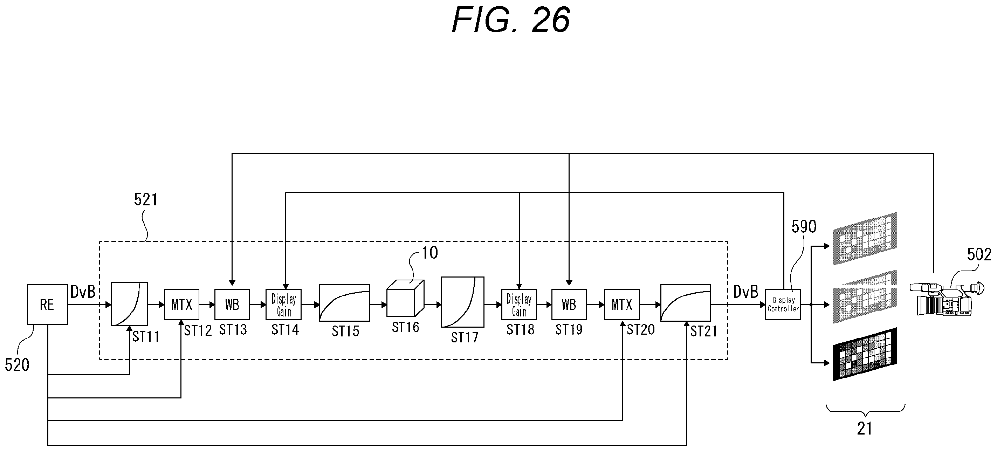

Specifically, the color conversion unit 521 that performs color conversion using the LUT 10 performs processing as illustrated in Fig. 26.

Fig. 26 illustrates the rendering engine 520, the color conversion unit 521, the display controller 590, the display 21, and the camera 502 assuming the configuration as described in Figs. 5 and 10, for example. The display 21 schematically illustrates three luminance setting states as an example of a case where the luminance adjustment is performed.

In the processing of the color conversion unit 521 in this case, in a case where the luminance adjustment of the display 21 and the white balance adjustment of the camera 502 are performed, the video data input to the LUT 10 is converted to have the same condition as that at the time of LUT creation, and after the color conversion is performed by the LUT 10, the video data is returned to the video data under the condition of the input stage to the color conversion unit 521.

The color conversion unit 521 to which the background video data DvB is input from the rendering engine 520 performs curve conversion in step ST11, matrix conversion in step ST12, white balance conversion in step ST13, and display gain conversion in step ST14. Then, in step ST16, the background video data DvB having the characteristics after the above conversion is input to the LUT 10. This is the condition correspondence conversion processing of converting the video data input to the LUT 10 so as to have the same condition as that at the time of LUT creation.

In addition, color conversion by the LUT 10 is performed in step ST16, and a color conversion output is obtained in step ST17. This is inverse characteristics to the input of the LUT 10.

Then, the display gain conversion in step ST18, the white balance conversion in step ST19, the matrix conversion in step ST20, and the curve conversion in step ST21 are performed, and the background video data DvB having characteristics after these conversions is supplied to the display controller 590 and displayed on the display 21. This is processing (inverse conversion of the condition correspondence conversion processing) of returning to the video data of the condition at the input stage to the color conversion unit 521 after the color conversion is performed by the LUT 10.

In such conversion before and after the LUT 10, setting information is fetched in real time from the display controller 590, the rendering engine 520, and the camera 502.

For example, it is assumed that the LUT 10 is created under the condition that the luminance setting of the display 21 is 1000 nits and the white balance is 6500 K. Then, a case where 1000 nits output is currently performed from the rendering engine 520, but the output is performed at 500 nits on the display 21, and imaging is performed with the white balance of the camera 502 set to 3200 K will be assumed.

The color conversion unit 521 acquires the gamma characteristics of the background video data DvB to be output and the color gamut information of the rendering engine 520 from the rendering engine 520. Then, in step ST11, the color conversion unit 521 obtains the background video data DvB having linear characteristics by curve conversion using an inverse curve of the gamma characteristics of the rendering engine 520, and converts the background video data DvB into the LUT color gamut by matrix conversion in step ST12.

In addition, the color conversion unit 521 takes in the white balance setting information from the camera 502, and takes in the luminance setting information of the display 21 from the display controller 590. As a result, the color conversion unit 521 converts the background video data DvB into the white balance state at the time of LUT creation in step ST13, and converts the background video data DvB into the display luminance state at the time of LUT creation in step ST14. For example, when the white balance at the time of creating the LUT is 6500 K and the current white balance is 3200 K, the state of the white balance of 3200 K is converted into the state of 6500 K. Further, the luminance setting is converted from a state of 1000 nits to a state of 2000 nits.

As a result, at the stage of step ST15, the background video data DvB returns to the state at the time of LUT creation. Therefore, the color conversion unit 521 can execute more appropriate color conversion by the LUT 10 in step ST16.

Thereafter, the color conversion unit 521 converts the state of 2000 nits to a state of 1000 nits in step ST18, and converts the state of the white balance from a state of 6500 K to a state of 3200 K in step ST19. Then, the color conversion unit 521 converts the background video data DvB into the color gamut of the rendering engine 520 by matrix conversion in step ST20, and returns the color gamut to the gamma characteristics of the rendering engine 520 in step ST21.

As a result, it is possible to obtain the background video data DvB that is in the state output from the rendering engine 520, that is, the characteristics due to the current luminance setting of the display 21 and the white balance of the camera 502, and has undergone appropriate color conversion by the LUT 10.

The background video data DvB is supplied to the display 21 from a state of 1000 nits to a state of 500 nits using the display controller 590.

Note that the conversion from 1000 nits to 2000 nits in step ST14 is performed in order to relatively halve the input to the LUT 10 by converting the background video data DvB of 1000 nits from the rendering engine 520 from 1000 nits to 2000 nits in order to output the background video data DvB of 500 nits on the display 21.

By the above method, regardless of the settings of the display 21, the rendering engine 520, and the camera 502 at the time of imaging, color correction can be correctly performed in real time using the LUT 10 created in advance under a specific condition.

Note that, in the example of Fig. 26, the "processing of converting the background video data DvB into the luminance and white balance at the time of LUT creation" and the "processing of converting the background video data DvB into the luminance of the display 21 and the white balance of the camera 502" are realized using curve conversion, matrix conversion, white balance conversion, and display gain conversion, but the present invention is not limited to these conversions, and may be realized by changing a module.

### <6. Summary and Modification Examples>

According to the above-described embodiments, the following effects can be obtained.

The information processing device 70 according to the embodiment includes the color conversion unit 521 that performs color conversion on the video data (for example, the background video data DvB) to be imaged, displayed on the display 21, using the LUT 10 that is table information reflecting inverse characteristics of characteristics "D" of the display 21. For example, the rendering engine 520 including the color conversion unit 521 in Fig. 9 and the information processing device 70 functioning as the color conversion unit 521 in Fig. 10 are used. The table information reflecting the inverse characteristics of the characteristics "D" refers to table information for performing conversion including the inverse characteristics of "D" as described as "D^-1" or "LC^-1 (D^-1)".

The color conversion unit 521 performs color conversion on the video displayed on the display 21 such as the LED wall 505 in advance, for example, the background video data DvB of the background video vB using the LUT 10, so that it is possible to capture the video in which the color change due to the influence of the light emission characteristics of the display 21 does not occur for the background.

The video data to be subjected to the color conversion processing is not limited to the background video data DvB, that is, the video data used as the "background". For example, video data displayed on the display 21 but used as a foreground may be used. It is not necessarily intended to be captured together with the object. That is, the present technology can be applied to video data of a video displayed on the display device as an imaging target.

It similarly applies to the background video vB and the background video data DvB described below, and the present technology can also be applied to video and video data that are not used as the "background".

In the embodiment, the color conversion is performed on the video data (background video data DvB) of the background video vB displayed on the display 21 and to be imaged together with the object by using LUT 10.

That is, the color conversion is applied to the background video vB of the virtual production.

As a result, the colors of the original background video data DvB and the video data of the background video portion in the captured video vC are matched with each other with high accuracy. Then, as the background video vB and the captured video vC of the object, it is possible to obtain a video without discomfort.

This also simplifies or eliminates work such as correction processing for color matching at the stage of post-production ST3 after imaging, thereby improving the production efficiency of video content.

In the embodiment, an example has been described in which the LUT 10 reflects inverse characteristics "LC^-1 (D^-1)" of characteristics obtained by combining the characteristics "D" of the display 21 and the characteristics "LC" of the camera 502 that captures the background video vB.

Since the LUT 10 reflects inverse characteristics of characteristics obtained by combining the characteristics of the display 21 and the characteristics of the camera 502, it is possible to capture a video in which color change due to the influence of the light emission characteristics of the display 21 and the characteristics of the camera 502 does not occur with respect to the background. As a result, the color of the original background video data DvB matches the color of the video data of the background video portion in the captured video vC with high accuracy, and it is possible to obtain a video having no discomfort as the captured video vC.

In addition, an example has been described in which the LUT 10 reflects inverse characteristics "D^-1" of characteristics "D" of the display 21. In this way, for example, in a case where it is desired to take advantage of the color change due to the characteristics of the camera 502, it is possible to cancel only the color change due to the light emission characteristics of the display 21.

The LUT 10, which is table information according to the embodiment, is a 3D-LUT including three axes corresponding to three primary colors and storing a conversion value for each three-dimensional grid point.

The LUT 10, which is a 3D-LUT, allows the color conversion unit 521 to easily perform color conversion processing. When the number of grid points on each of the R, G, and B axes of the LUT 10 is large, more accurate color conversion can be performed.

Note that the table information is not limited to the form of the 3D-LUT, and may be in other forms.

The information processing device 70 according to the embodiment has described an example in which the background video data DvB is generated by rendering using a 3D model, and the color conversion unit 521 performs color conversion on the generated background video data DvB.

That is, in the information processing device 70 functioning as the rendering engine 520 as illustrated in Fig. 9, the color conversion unit 521 is provided, and the color conversion processing is performed on the background video vB (background video data DvB) generated by the rendering. By using such a rendering engine 520, imaging that is not affected by the light emission characteristics of the display 21 can be performed.

Note that the video data generated by rendering is not limited to the video data serving as the "background".

The example in which the information processing device 70 of the embodiment inputs the background video data DvB generated by the rendering using the 3D model, and the color conversion unit 521 performs the color conversion on the input background video data DvB has been described.

That is, as illustrated in Fig. 10, the information processing device 70 separate from the rendering engine 520 includes the color conversion unit 521, and the color conversion processing is performed on the video data such as the background video data DvB. By using such an information processing device 70, even the imaging system 500 using the rendering engine 520 having no color conversion function can perform imaging without being affected by the light emission characteristics of the display 21.

The example in which the LUT 10 of the embodiment is created on the basis of the video data DvCLI and the LUT creation video data DvLT obtained by displaying the LUT creation video vLT (table information creation video) on the display 21, performing color conversion on the creation-time captured video data DvCL obtained by imaging by the camera 502 using the inverse conversion LUT 11 reflecting the inverse characteristics "LC^-1" of the characteristics of the camera 502, and performing color conversion has been described.

Such an LUT 10 is table information reflecting inverse characteristics of the characteristics of the display 21, and is appropriate table information in a case where it is desired to leave the characteristics of the camera 502 in the captured video vC. The LUT 10 is preferably used in a case where it is desired to leave the characteristics of the camera 502 in the captured video vC.

In the embodiment, an example is described in which the color conversion unit 521 performs the conditional correspondence conversion for converting the video data into the video data under the imaging condition at the time of creating LUT 10, then performs the color conversion by LUT 10, and performs the inverse conversion of the conditional correspondence conversion after the color conversion (see Fig. 26).

For example, in a case where the LUT 10 is created and the imaging condition is changed, the condition correspondence conversion is performed such that the background video data DvB matches the imaging condition at the time of imaging of the LUT 10. As a result, even if the imaging condition is changed, highly accurate color conversion using the LUT 10 becomes possible. Then, when the inverse conversion of the conditional correspondence conversion is performed after the color conversion, it is possible to return the background video data to the background video data DvB according to the current imaging condition. Therefore, even if the conditions at the time of imaging are changed, the color correction effect by the color conversion using the LUT 10 can be effectively exhibited.

In the embodiment, an example of the luminance setting condition of the display 21 has been described as the imaging condition.

For example, even in a case where the luminance of the display 21 such as the LED wall 505 is increased or decreased in the imaging process, the color conversion by the LUT 10 can be appropriately performed. Therefore, it is not prevented that the luminance of the display 21 is changed according to the situation.

In the embodiment, an example of the white balance setting condition of the camera 502 that images the display video of the display 21 has been described as the imaging condition.

For example, even in a case where the white balance of the camera 502 is changed in the imaging process, color conversion by the LUT 10 can be appropriately performed according to the change. Therefore, white balance adjustment of the camera 502 is not hindered according to the situation.

As the information processing device 70 of the embodiment, the information processing device 70 including the LUT creation module 30 (table information creation unit) that generates the LUT 10 reflecting the inverse characteristics of the characteristics of the display 21, which is used for color conversion, for example, of the video data of the display video displayed on the display 21 and to be imaged together with the object, has been described.

The LUT 10 suitable for the imaging system can be created by the LUT creation module 30 of the information processing device 70. For example, by creating the LUT 10 in the imaging system 500 prior to imaging, imaging with high color accuracy can be performed using the LUT 10 at the time of imaging.

In the embodiment, an example has been described in which the LUT creation module 30 as the table information creation unit causes the display 21 to display the LUT creation video vLT, performs color conversion on the creation-time captured video data DvCL obtained by imaging by the camera 502 using the inverse conversion LUT 11 reflecting the inverse characteristics of the characteristics of the camera 502, and creates the LUT 10 on the basis of the video data DvCLI subjected to the color conversion and the LUT creation video data DvLT.

The characteristics of the camera 502 are characteristics of a lens and characteristics of a color change caused by an image sensor and signal processing of the camera 502. In a case where the display 21 on which the LUT creation video vLT is displayed is captured by the camera 502, color conversion is performed by the inverse conversion LUT 11 reflecting the inverse characteristics of the characteristics of the camera 502, whereby the video data DvCLI has the characteristics of the display 21. Therefore, by comparing the video data DvCLI having the characteristics of the display 21 with the original LUT creation video data DvLT, the LUT 10 reflecting the inverse characteristics of the characteristics of the display 21 can be created. This is suitable as the LUT 10 used in a case where it is desired to leave the characteristics of the camera 502 while avoiding the color change due to the characteristics of the display 21 in the captured video vC.

In the embodiment, an example has been described in which the LUT creation module 30 creates the LUT 10 using the LUT creation video data DvLT of a plurality of frames displaying different colors and the creation-time captured video data DvCL video data of a plurality of frames obtained by sequentially displaying the LUT creation video vLT on the display 21 and imaging by the camera 502.

That is, it is a method of creating the LUT 10 described as the processing in the high accuracy mode by the LUT creation module 30.

As a result, the LUT 10 can acquire the color value corresponding to each grid point as the color value of the LUT creation video data DvLT and the color value of the creation-time captured video data DvCL (or the video data DvCLI) obtained by imaging the LUT creation video data DvLT. That is, the LUT 10 can be created based on actually observed color values. As a result, the LUT 10 with high accuracy can be created.

In the embodiment, an example has been described in which each frame of the LUT creation video vLT of a plurality of frames is a monochrome video, and each frame is a different color video.

The LUT creation video vLT of one frame and one color is sequentially displayed and captured to create the LUT 10 holding the correspondence relationship of the values of the respective colors. In this case, there is an advantage that alignment for each color region of the LUT creation video vLT and the creation-time captured video vCL is unnecessary.

In the embodiment, an example has been described in which each frame of the LUT creation video vLT of a plurality of frames is a video including a plurality of colors and is a video of different colors.

In a case where the LUT creation video vLT of a plurality of colors of one frame is sequentially displayed and captured, the number of frames can be reduced. As a result, the creation time of the LUT 10 can be shortened.

In the embodiment, an example has been described in which the LUT creation module 30 displays the LUT creation video vLT of one frame including a plurality of colors on the display 21, and creates the LUT 10 using the color samples obtained from the creation-time captured video data DvCL obtained by imaging by the camera 502.

That is, it is a method of creating the LUT 10 described as the high speed mode processing by the LUT creation module 30.

As a result, it is possible to shorten the time for creating the LUT 10. For example, it is possible to easily re-create the LUT 10 according to the imaging condition or the like.

In addition, since only one frame is used as the LUT creation video vLT, it is not necessary to adjust the timing of frames necessary in the high accuracy mode.

In the embodiment, an example of the information processing device 70 built in the camera 502 that captures the LUT creation video vLT displayed on the display 21 has been described (see Fig. 15).

That is, it is assumed that the information processing device 70 including the LUT creation module 30 is built in the camera 502. By using such a camera 502, creation of the LUT 10 and provision of the LUT 10 to the rendering engine 520 and the like in the imaging system 500 are facilitated.

In the embodiment, an example has been described in which the LUT creation module 30 creates the LUT 10 using the creation-time captured video data DvCL video data input from the camera 502 that images the LUT creation video vLT displayed on the display 21 (see Fig. 16).

That is, it is assumed that the information processing device 70 including the LUT creation module 30 is realized as the set top box 50 or the like separated from the camera 502. By using the information processing device 70 as such a set top box 50 or the like, it is possible to create the LUT 10 and provide the LUT 10 to the rendering engine 520 or the like even in the imaging system 500 using the existing camera 502.

The processing of the color conversion unit 521 in the embodiment, that is, the color conversion processing using the LUT 10 can also be implemented by cloud computing. For example, in the production ST2, the rendering engine 520 transmits the background video data DvB to a cloud server including the color conversion unit 521, and the cloud server performs color conversion. Then, it is also possible to perform processing in which the rendering engine 520 receives the background video data DvB subjected to the color conversion and transmits the background video data DvB to the display controller 590.

In addition, the creation processing of the LUT 10 described in the embodiment, that is, the processing of the LUT creation module 30 can also be implemented by cloud computing.

For example, the cloud server including the LUT creation module 30 transmits the LUT creation video data DvLT and displays the LUT creation video vLT on the display 21. Then, the creation-time captured video data DvCL imaged by the camera 502 is transmitted to the cloud server. As a result, the LUT 10 can be created by the LUT creation module 30 of the cloud server. The cloud server transmits the created LUT 10 to the LUT-using device 20.

The program according to the embodiment is a program for causing a processor such as a CPU or a DSP, or a device including the processor to execute the processing of the color conversion unit 521 described above.

That is, the program of the embodiment is a program that causes the information processing device 70 to execute processing of performing color conversion on the video data of the display video to be imaged and displayed on the display 21 by using the table information such as the LUT 10 reflecting the inverse characteristics of the characteristics of the display 21.

In addition, another program of the embodiment is a program for causing a processor such as a CPU or a DSP, or a device including these to execute the processing of the LUT creation module 30 described above.

That is, the program of the embodiment is a program that causes the information processing device 70 to execute processing of generating table information such as the LUT 10 reflecting the inverse characteristics of the characteristics of the display 21, which is used for color conversion for the video data of the display video to be imaged and displayed on the display 21.

With these programs, the information processing device 70 that executes the processing of the color conversion unit 521 and the processing of the LUT creation module 30 described above can be realized by various computer devices.

Such a program can be recorded in advance in an HDD as a recording medium built in a device such as a computer device, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program may be installed from the removable recording medium into a personal computer or the like, or may be downloaded from a download site via a network such as a local area network (LAN) or the Internet.

Furthermore, such a program is suitable for providing the information processing device 70 of the embodiment in a wide range. For example, by downloading the program to a personal computer, a communication device, a portable terminal device such as a smartphone or a tablet, a mobile phone, a game device, a video device, a personal digital assistant (PDA), or the like, these devices can be caused to function as the information processing device 70 of the present disclosure.

Note that, the effects described in the present specification are merely examples and are not limited, and other effects may be provided.

### REFERENCE SIGNS LIST

- 10: LUT
- 11: Inverse conversion LUT
- 20: LUT-using device
- 21: Display
- 30: LUT creation module
- 31: Sync generator
- 32: Color frame generator
- 33: LUT generator
- 34: V delayer
- 35: Color sampler
- 36: High-speed LUT generator
- 37: LUT inverter
- 38: Mixer
- 39: Comparator
- 40: Interface
- 41: Inverse conversion unit
- 50: Set top box
- 70: Information processing device
- 71: CPU
- 85: Video processing unit
- 500: Imaging system
- 502: Camera
- 505: LED wall
- 506: LED panel
- 510: Performer
- 520: Rendering engine
- 521: Color conversion unit
- vB: Background video
- vC: Captured video
- vLT: LUT creation video
- vCL: Creation-time captured video
- vOL: Alignment video
- DvCLI: Video data
- DvB: Background video data
- DvLT: LUT creation video data
- DvCL: Creation-time captured video data

## Claims

1. An information processing device (70) comprising
a color conversion unit (521) that performs color conversion on video data of a display video displayed on a display (21) and to be imaged by using table information reflecting an inverse characteristic of a characteristic of the display,
wherein the table information reflects an inverse characteristic of a characteristic obtained by combining a characteristic of the display and a characteristic of a camera (502) that images the display video.

2. The information processing device according to claim 1, wherein
the video data is video data of a background video to be imaged together with an object, the background video being displayed on the display.

3. The information processing device according to claim 1, wherein
the table information is a 3D-LUT including three axes corresponding to respective colors of three primary colors and storing a conversion value for each three-dimensional grid point.

4. The information processing device according to claim 1, wherein
the information processing device either i) generates the video data by rendering using a 3D model, and performs color conversion on the video data generated by the color conversion unit or ii) inputs the video data generated by rendering using a 3D model, and performs color conversion on the video data input by the color conversion unit.

5. The information processing device according to claim 1, wherein
the table information is table information made by:
causing a display to display a table creation video; performing color conversion on video data obtained by imaging with a camera by using table information reflecting an inverse characteristic of a characteristic of the camera; and being created on a basis of the video data subjected to the color conversion and the video data of the table creation video.

6. The information processing device according to claim 1, wherein
the color conversion unit performs conditional correspondence conversion for converting the video data into video data under an imaging condition at a time of creating the table information, then performs color conversion based on the table information, and performs inverse conversion of the conditional correspondence conversion after the color conversion.

7. The information processing device according to claim 6, wherein
the imaging condition is either i) a luminance condition of the display or ii) a white balance condition of a camera that images the display video of the display.

8. An information processing device (70) comprising
a table information creation unit (30) that generates table information that is used for color conversion of video data of a display video displayed on a display (21) and to be imaged and reflects an inverse characteristic of a characteristic of the display,
wherein the table information reflects an inverse characteristic of a characteristic obtained by combining a characteristic of the display and a characteristic of a camera (502) that images the display video.

9. The information processing device according to claim 8, wherein
the table information creation unit:
causes a display to display a table information creation video; performs color conversion on video data obtained by imaging with a camera by using table information reflecting an inverse characteristic of a characteristic of the camera; and creates the table information on a basis of the video data subjected to the color conversion and the video data of the table information creation video.

10. The information processing device according to claim 8, wherein
the table information creation unit
creates the table information by using:
video data of a table information creation video of a plurality of frames displaying different colors; and
video data of a plurality of frames obtained by imaging each frame of the table information creation video with a camera.

11. The information processing device according to claim 10, wherein
each frame of the table information creation video is either i) a monochrome video, and each frame is a different color video or ii) a video including a plurality of colors, and each frame is a video of a color different from each other.

12. The information processing device according to claim 8, wherein
the table information creation unit
creates the table information by displaying a table information creation video of one frame including a plurality of colors on a display, and using a color sample obtained from video data obtained by imaging with a camera.

13. The information processing device according to claim 8, wherein
the information processing device is incorporated in a camera that images a table information creation video displayed on the display.

14. The information processing device according to claim 8, wherein
the table information creation unit
creates the table information by using video data input from a camera that images a table information creation video displayed on the display.

15. An information processing method comprising
performing, by an information processing device (70), processing of generating table information that is used for color conversion of video data of a display video displayed on a display (21) and to be imaged and reflects an inverse characteristic of a characteristic of the display,
wherein the table information reflects an inverse characteristic of a characteristic obtained by combining a characteristic of the display and a characteristic of a camera (502) that images the display video.

## Patentansprüche

1. Informationsverarbeitungsvorrichtung (70), umfassend
eine Farbkonvertierungseinheit (521), die eine Farbkonvertierung an Videodaten eines Anzeigevideos durchführt, das auf einer Anzeige (21) angezeigt wird und durch Verwenden von Tabelleninformationen abzubilden ist, die ein inverses Merkmal eines Merkmals der Anzeige widerspiegeln,
wobei die Tabelleninformationen ein inverses Merkmal eines Merkmals widerspiegeln, das durch Kombinieren eines Merkmals der Anzeige und eines Merkmals einer Kamera (502) erhalten wird, die das Anzeigevideo abbildet.

2. Informationsverarbeitungsvorrichtung nach Anspruch 1, wobei
die Videodaten Videodaten eines Hintergrundvideos sind, das zusammen mit einem Objekt abzubilden ist, wobei das Hintergrundvideo auf der Anzeige angezeigt wird.

3. Informationsverarbeitungsvorrichtung nach Anspruch 1, wobei
die Tabelleninformationen eine 3D-LUT sind, die drei Achsen einschließt, die jeweiligen Farben von drei Primärfarben zugeordnet sind, und die einen Konvertierungswert für jeden dreidimensionalen Gitterpunkt speichert.

4. Informationsverarbeitungsvorrichtung nach Anspruch 1, wobei
die Informationsverarbeitungsvorrichtung entweder i) die Videodaten durch Rendering unter Verwendung eines 3D-Modells erzeugt und die Farbkonvertierung an den durch die Farbkonvertierungseinheit erzeugten Videodaten durchführt oder ii) die durch Rendering unter Verwendung eines 3D-Modells erzeugten Videodaten eingibt und die Farbkonvertierung an den durch die Farbkonvertierungseinheit eingegebenen Videodaten durchführt.

5. Informationsverarbeitungsvorrichtung nach Anspruch 1, wobei
die Tabelleninformationen Tabelleninformationen sind, die erzielt werden durch:
Veranlassen einer Anzeige, ein Tabellenerstellungsvideo anzuzeigen; Durchführen der Farbkonvertierung an Videodaten, die durch Abbilden mit einer Kamera erhalten werden, durch Verwenden von Tabelleninformationen, die ein inverses Merkmal eines Merkmals der Kamera widerspiegeln; und auf einer Basis der der Farbkonvertierung unterzogenen Videodaten und der Videodaten des Tabellenerstellungsvideos erstellt werden.

6. Informationsverarbeitungsvorrichtung nach Anspruch 1, wobei
die Farbkonvertierungseinheit eine bedingte Zuordnungskonvertierung zum Konvertieren der Videodaten in Videodaten unter einer Abbildungsbedingung zu einem Zeitpunkt der Erstellung der Tabelleninformationen durchführt, dann die Farbkonvertierung basierend auf den Tabelleninformationen durchführt und nach der Farbkonvertierung eine inverse Konvertierung der bedingten Zuordnungskonvertierung durchführt.

7. Informationsverarbeitungsvorrichtung nach Anspruch 6, wobei
die Abbildungsbedingung entweder i) eine Leuchtdichtebedingung der Anzeige oder ii) eine Weißabgleichbedingung einer Kamera ist, die das Anzeigevideo der Anzeige abbildet.

8. Informationsverarbeitungsvorrichtung (70), umfassend
eine Tabelleninformationserstellungseinheit (30), die Tabelleninformationen erzeugt, die für die Farbkonvertierung von Videodaten eines auf einer Anzeige (21) angezeigten und abzubildenden Anzeigevideos verwendet werden und ein inverses Merkmal eines Merkmals der Anzeige widerspiegeln,
wobei die Tabelleninformationen ein inverses Merkmal eines Merkmals widerspiegeln, das durch Kombinieren eines Merkmals der Anzeige und eines Merkmals einer Kamera (502) erhalten wird, die das Anzeigevideo abbildet.

9. Informationsverarbeitungsvorrichtung nach Anspruch 8, wobei
die Tabelleninformationserstellungseinheit:
eine Anzeige veranlasst, ein Tabelleninformationserstellungsvideo anzuzeigen; die Farbkonvertierung an Videodaten durchführt, die durch Abbilden mit einer Kamera erhalten werden, durch Verwenden von Tabelleninformationen, die ein inverses Merkmal eines Merkmals der Kamera widerspiegeln; und die Tabelleninformationen auf einer Basis der der Farbkonvertierung unterzogenen Videodaten und der Videodaten des Tabelleninformationserstellungsvideos erstellt.

10. Informationsverarbeitungsvorrichtung nach Anspruch 8, wobei
die Tabelleninformationserstellungseinheit
die Tabelleninformationen erstellt durch Verwenden von:
Videodaten eines Tabelleninformationserstellungsvideos einer Vielzahl von Frames, die unterschiedliche Farben anzeigen; und
Videodaten einer Vielzahl von Frames, die durch Abbilden jedes Frames des Tabelleninformationserstellungsvideos mit einer Kamera erhalten werden.

11. Informationsverarbeitungsvorrichtung nach Anspruch 10, wobei
jedes Bild des Tabelleninformationserstellungsvideos entweder i) ein monochromes Video ist und jeder Frame ein Video unterschiedlicher Farben ist oder ii) ein Video einschließlich einer Vielzahl von Farben ist und jeder Frame ein Video einer sich von anderen unterscheidenden Farbe ist.

12. Informationsverarbeitungsvorrichtung nach Anspruch 8, wobei
die Tabelleninformationserstellungseinheit
die Tabelleninformationen durch Anzeigen eines Tabelleninformationserstellungsvideos von einem eine Vielzahl von Farben einschließenden Frame auf einer Anzeige und unter Verwendung einer Farbprobe erstellt, die von Videodaten erhalten wird, die durch Abbilden mit einer Kamera erhalten werden.

13. Informationsverarbeitungsvorrichtung nach Anspruch 8, wobei
die Informationsverarbeitungsvorrichtung in eine Kamera eingebaut ist, die ein auf der Anzeige angezeigtes Tabelleninformationserstellungsvideo abbildet.

14. Informationsverarbeitungsvorrichtung nach Anspruch 8, wobei
die Tabelleninformationserstellungseinheit
die Tabelleninformationen durch Verwenden von Videodateneingaben von einer Kamera erstellt, die ein auf der Anzeige angezeigtes Tabelleninformationserstellungsvideo abbildet.

15. Informationsverarbeitungsverfahren, umfassend
Durchführen, durch eine Informationsverarbeitungsvorrichtung (70), einer Verarbeitung zum Erzeugen von Tabelleninformationen, die für die Farbkonvertierung von Videodaten eines auf einer Anzeige (21) angezeigten und abzubildenden Anzeigevideos verwendet werden und ein inverses Merkmal eines Merkmals der Anzeige widerspiegeln,
wobei die Tabelleninformationen ein inverses Merkmal eines Merkmals widerspiegeln, das durch Kombinieren eines Merkmals der Anzeige und eines Merkmals einer Kamera (502) erhalten wird, die das Anzeigevideo abbildet.

## Revendications

1. Dispositif de traitement d'informations (70) comprenant
une unité de conversion de couleur (521) qui réalise une conversion de couleur sur des données vidéo d'une vidéo d'affichage affichée sur un dispositif d'affichage (21) et à imager en utilisant des informations de table reflétant une caractéristique inverse d'une caractéristique du dispositif d'affichage,
dans lequel les informations de table reflètent une caractéristique inverse d'une caractéristique obtenue en combinant une caractéristique du dispositif d'affichage et une caractéristique d'une caméra (502) qui image la vidéo d'affichage.

2. Dispositif de traitement d'informations selon la revendication 1, dans lequel
les données vidéo sont des données vidéo d'une vidéo d'arrière-plan à imager conjointement avec un objet, la vidéo d'arrière-plan étant affichée sur le dispositif d'affichage.

3. Dispositif de traitement d'informations selon la revendication 1, dans lequel
les informations de table sont une LUT 3D comportant trois axes correspondant à des couleurs respectives de trois couleurs primaires et stockant une valeur de conversion pour chaque point de grille tridimensionnelle.

4. Dispositif de traitement d'informations selon la revendication 1, dans lequel
le dispositif de traitement d'informations soit i) génère les données vidéo par rendu à l'aide d'un modèle 3D, et réalise une conversion de couleur sur les données vidéo générées par l'unité de conversion de couleur, soit ii) entre les données vidéo générées par rendu à l'aide d'un modèle 3D, et réalise une conversion de couleur sur les données vidéo entrées par l'unité de conversion de couleur.

5. Dispositif de traitement d'informations selon la revendication 1, dans lequel
les informations de table sont des informations de table effectuées par :
le fait d'amener un dispositif d'affichage à afficher une vidéo de création de table ; la réalisation d'une conversion de couleur sur des données vidéo obtenues par imagerie avec une caméra en utilisant des informations de table reflétant une caractéristique inverse d'une caractéristique de la caméra ; et le fait d'être créé sur la base des données vidéo soumises à la conversion de couleur et des données vidéo de la vidéo de création de table.

6. Dispositif de traitement d'informations selon la revendication 1, dans lequel
l'unité de conversion de couleur réalise une conversion de correspondance conditionnelle pour convertir les données vidéo en données vidéo dans une condition d'imagerie au moment de la création des informations de table, puis réalise une conversion de couleur sur la base des informations de table, et réalise une conversion inverse de la conversion de correspondance conditionnelle après la conversion de couleur.

7. Dispositif de traitement d'informations selon la revendication 6, dans lequel
la condition d'imagerie est soit i) une condition de luminance du dispositif d'affichage, soit ii) une condition de balance des blancs d'une caméra qui image la vidéo d'affichage du dispositif d'affichage.

8. Dispositif de traitement d'informations (70) comprenant
une unité de création d'informations de table (30) qui génère des informations de table qui sont utilisées pour une conversion de couleur de données vidéo d'une vidéo d'affichage affichée sur un dispositif d'affichage (21) et à imager et qui reflètent une caractéristique inverse d'une caractéristique du dispositif d'affichage,
dans lequel les informations de table reflètent une caractéristique inverse d'une caractéristique obtenue en combinant une caractéristique du dispositif d'affichage et une caractéristique d'une caméra (502) qui image la vidéo d'affichage.

9. Dispositif de traitement d'informations selon la revendication 8, dans lequel
l'unité de création d'informations de table :
amène un dispositif d'affichage à afficher une vidéo de création d'informations de table ; réalise une conversion de couleur sur des données vidéo obtenues par imagerie avec une caméra en utilisant des informations de table reflétant une caractéristique inverse d'une caractéristique de la caméra ; et crée les informations de table sur la base des données vidéo soumises à la conversion de couleur et des données vidéo de la vidéo de création d'informations de table.

10. Dispositif de traitement d'informations selon la revendication 8, dans lequel
l'unité de création d'informations de table
crée les informations de table en utilisant :
des données vidéo d'une vidéo de création d'informations de table d'une pluralité de trames affichant des couleurs différentes ; et
des données vidéo d'une pluralité de trames obtenues en imageant chaque trame de la vidéo de création d'informations de table avec une caméra.

11. Dispositif de traitement d'informations selon la revendication 10, dans lequel
chaque trame de la vidéo de création d'informations de table est soit i) une vidéo monochrome, et chaque trame est une vidéo de couleur différente, soit ii) une vidéo comportant une pluralité de couleurs, et chaque trame est une vidéo d'une couleur différente les unes des autres.

12. Dispositif de traitement d'informations selon la revendication 8, dans lequel
l'unité de création d'informations de table
crée les informations de table en affichant une vidéo de création d'informations de table d'une trame comportant une pluralité de couleurs sur un dispositif d'affichage, et à l'aide d'un échantillon de couleur obtenu à partir de données vidéo obtenues par imagerie avec une caméra.

13. Dispositif de traitement d'informations selon la revendication 8, dans lequel
le dispositif de traitement d'informations est intégré à une caméra qui image une vidéo de création d'informations de table affichée sur le dispositif d'affichage.

14. Dispositif de traitement d'informations selon la revendication 8, dans lequel
l'unité de création d'informations de table
crée les informations de table en utilisant une entrée de données vidéo provenant d'une caméra qui image une vidéo de création d'informations de table affichée sur le dispositif d'affichage.

15. Procédé de traitement d'informations comprenant
la réalisation, par un dispositif de traitement d'informations (70), du traitement d'informations de table de génération qui sont utilisées pour une conversion de couleur de données vidéo d'une vidéo d'affichage affichée sur un dispositif d'affichage (21) et à imager et qui reflètent une caractéristique inverse d'une caractéristique du dispositif d'affichage,
dans lequel les informations de table reflètent une caractéristique inverse d'une caractéristique obtenue en combinant une caractéristique du dispositif d'affichage et une caractéristique d'une caméra (502) qui image la vidéo d'affichage.
